# EUROPÄISCHE PATENTANMELDUNG

(11) **EP 4 459 146 A1**
(43) Veröffentlichungstag der Anmeldung: **06.11.2024**
(21) Anmeldenummer: 23170910.6
(22) Anmeldetag: 01.05.2023
(51) Int. Cl.: F16C 19/54, F16C 35/063, F16C 35/067

(54) **ELEKTRISCHE ANTRIEBSKOMPONENTE UND VERFAHREN UND HERSTELLVORRICHTUNG ZU DESSEN HERSTELLUNG, SOWIE ELEKTRISCHER ANTRIEB MIT EINER SOLCHEN ELEKTRISCHEN ANTRIEBSKOMPONENTE**

(71) Anmelder: maxon international ag, 6072 Sachseln (CH)
(72) Erfinder: WILLINER, Joel, 6072 Sachseln (CH); ABEGG, Andreas, 6064 Kerns (CH)
(74) Vertreter: IPrime Rentsch Kaelin AG

(57) **Zusammenfassung**

Verfahren zum Herstellen einer elektrischen Antriebskomponente 20 mit mindestens zwei Lagereinrichtungen 21, 25 und umfasst zumindest die folgenden Schritte: Bereitstellen eines ersten Befestigungselements 31; Anordnen einer ersten Lagereinrichtung 21 an dem ersten Befestigungselement 31; Anordnen einer zweiten Lagereinrichtung 25 an dem ersten Befestigungselement 31; Einleiten einer Vorspannkraft Fv auf zumindest eine der beiden Lagereinrichtungen 21, 25, wobei die eingeleitete Vorspannkraft Fv eine Krafteinwirkung auf beide Lagereinrichtungen 21, 25 bewirkt; und zumindest eine der beiden Lagereinrichtungen 21, 25 bei wirkender Vorspannkraft Fv mit zumindest einem zweiten Befestigungselement 36 in mindestens einem Schweissbereich B1, B2, B3 verschweisst wird, wodurch zumindest eine Schweissverbindung S1, S2, S3 zwischen einem Befestigungselementmaterial des zweiten Befestigungselements 36 mit einem Lagereinrichtungsmaterial einer der beiden Lagereinrichtungen 21, 25 entsteht. Die Erfindung umfasst auch eine elektrischen Antriebskomponente, eine Herstellvorrichtung zum Herstellen einer elektrischen Antriebskomponente sowie einen elektrischen Antrieb.

## Beschreibung

Die vorliegende Erfindung betrifft ein Verfahren zum Herstellen einer elektrischen Antriebskomponente gemäss dem Oberbegriff des Patentanspruchs 1, einen elektrische Antriebskomponente gemäss dem Oberbegriff des Patentanspruchs 10, eine Herstellvorrichtung gemäss dem Patentanspruch 14 und einen elektrischen Antrieb gemäss dem Oberbegriff des Patentanspruchs 15.

### Technologischer Hintergrund

Elektrische Antriebskomponenten, wie beispielsweise Motoren beziehungsweise Getriebe, umfassen eine Welle mit Lagereinrichtungen. Die Lagereinrichtungen verbinden einen Rotor mit einem Stator. Meist und insbesondre um grössere Radialkräfte aufnehmen zu können, wird der Rotor gegenüber dem Stator durch zwei Lagereinrichtungen gelagert. Dabei werden die Lagereinrichtungen am Rotor und am Stator derart befestigt, dass das axiale Spiel des Rotors und des Stators relativ zueinander minimiert ist.

Aus dem Stand der Technik ist die DE 10 2005 058078 A1 bekannt. Darin ist ein Elektromotor mit einem Lagersystem zum Lagern einer Welle offenbart, welches ein Wälzlager in Form eines Gleitlagers aufweist. Der Wälzkörper des Wälzlagers weist eine Nut auf, in der ein Federelement angeordnet ist. Im montierten Zustand des Elektromotors ist das Federelement in radialer Richtung vorgespannt, so dass eine spielfreie Lagerung einer Welle des Elektromotors in radialer Richtung mittels des Wälzlagers gewährleistet ist. Ein gattungsähnlicher Elektromotor ist aus der DE 10 2019 001273 A1 bekannt.

Nachteilig an der bekannten Lösung ist, dass das Federelement massebehaftet ist und damit selbst Schwingungen bei laufendem Elektromotor verursacht, sodass die Leistungsfähigkeit des Elektromotors verringert ist. Ferner kann bei Vibrationen oder Schlägen auf den Elektromotor das Federelement überbeansprucht werden und in seinen Endanschlag gehen. Dies geschieht insbesondere bei einem Federelement mit geringer Federspannkraft. Durch ein Federelement mit hoher Federspannkraft kann dies vermieden werden. Dabei wird das Lager jedoch stark vorgespannt, wodurch sich im Normalbetrieb eine hohe Reibung im Lager ergibt.

Weiters ist aus dem Stand der Technik die WO 2021 077373 A1 bekannt. Darin ist ein Elektromotor offenbart, der einen Stator, einen Rotor mit einer Welle und eine Lageranordnung umfasst. Die Lageranordnung umfasst ein Kugellager und ein Öllager. Das Kugellager und das Öllager sind im Inneren des Stators untergebracht, und die rotierende Welle durchdringt eine Basis des Stators. Die Welle und das Kugellager können miteinander geklebt, geschweißt, aufgeschnappt, geschraubt usw. werden. Gattungsähnliche Elektromotoren finden sich in der DE 10 2013 100741 A1 und der CN 213027571 U.

Nachteilig an den bekannten Lösungen ist, dass das Kugellager Eigenschwingungen im Betrieb des Elektromotors axial zur Welle ausbildet, sodass die Leistungsfähigkeit des Elektromotors verringert ist. Folgt man dem bekannten Schaeffler Diagramm aus der Literatur, dann sind derartige Materialien aufgrund des hohen Kohlenstoffanteils im Kugellagerstahl nicht schweissgeeignet. Es besteht beispielsweise eine erhöhte Gefahr für Heissrisse in den Schweissverbindungen.

Weiters ist aus dem Stand der Technik die DE 10 2013 227056 A1 bekannt. Darin ist ein Gehäuse für eine elektrische Maschine offenbart, das einen Gehäuserohling umfasst, der sich konzentrisch um eine Achse erstreckt. Im Gehäuserohling ist eine Umspritzung ausgeformt, die sich quer zur Achse erstreckt, und in die ein Lager mittig eingeformt ist. Am Lager ist ein Stanzblech mit einem ersten Schenkel angeschweisst, um das Lager mittig im Gehäuserohling zu halten, sodass das Lager anschliessend umspritzbar ist.

Nachteilig an der bekannten Lösung ist, dass das Lager mithilfe des Stanzblechs nur als Hilfsbefestigungsmittel für die später folgende Umspritzung dient und damit nichts zur Vorspannung bzw. Befestigung im Gehäuserohling im Betrieb des Elektromotors beisteuert.

### Darstellung der Erfindung

Eine Aufgabe der Erfindung besteht darin mindestens einen der Nachteile des Standes der Technik zu vermeiden, insbesondere soll ein verbessertes Verfahren zum Herstellen einer elektrischen Antriebskomponente geschaffen werden, sodass die elektrische Antriebskomponente weniger oder einfachere, standardisierte Bauteile umfasst und eine verbesserte Leistungsfähigkeit aufweist. Es soll eine verbesserte elektrische Antriebskomponente sowie ein verbesserter elektrischer Antrieb geschaffen werden, die leichter sind und/oder eine verbesserte Leistungsfähigkeit sowie eine verbesserte Lebensdauer aufweisen. Es solle eine Herstellvorrichtung geschaffen werden, mit der eine verbesserte elektrische Antriebskomponente herstellbar ist.

Diese Aufgabe wird durch die Merkmale der unabhängigen Patentansprüche gelöst. Vorteilhafte Weiterbildungen sind in den Figuren und in den abhängigen Patentansprüchen dargelegt.

Ein erfindungsgemässes Verfahren zum Herstellen einer elektrischen Antriebskomponente mit mindestens zwei Lagereinrichtungen umfasst zumindest die folgenden Schritte:
a) Bereitstellen eines ersten Befestigungselements;
b) Anordnen einer ersten Lagereinrichtung an dem ersten Befestigungselement;
c) Anordnen einer zweiten Lagereinrichtung an dem ersten Befestigungselement;
d) Einleiten einer Vorspannkraft auf zumindest eine der beiden Lagereinrichtungen, wobei
e) die eingeleitete Vorspannkraft eine Krafteinwirkung auf beide Lagereinrichtungen bewirkt; und
f) zumindest eine der beiden Lagereinrichtungen bei wirkender Vorspannkraft mit zumindest einem zweiten Befestigungselement in mindestens einem Schweissbereich verschweisst wird, wodurch zumindest eine Schweissverbindung zwischen einem Befestigungselementmaterial des zweiten Befestigungselements mit einem Lagereinrichtungsmaterial einer der beiden Lagereinrichtungen entsteht.

Die Vorspannung verhindert ein axiales Schwingen der Lagereinrichtungen und der an der Lagereinrichtung angeordneten Bauteile in der elektrischen Antriebskomponente während des Betriebs, sodass die elektrische Antriebskomponente spielfrei ist. Die Schweissverbindung bewirkt eine stoffschlüssige Verbindung ohne Zusatzmaterial oder Zusatzelement zwischen einer der beiden Lagereinrichtungen und dem zweiten Befestigungselement. Beim Schweissen wird Material des Befestigungselementes und Material der Lagereinrichtung so stark erwärmt, dass dies aufschmilzt und sich verflüssigt. Im aufgeschmolzenen Zustand vermischt sich die Schmelze des Befestigungselementmaterial mit der Schmelze des Lagereinrichtungsmaterial zu einer mehr oder weniger homogenen Schmelze. Wenn weniger oder keine Wärmeenergie mehr durch das Schweissen zugeführt wird, kühlt die Schmelze ab und erstarrt wieder. Durch das Erstarren der Schmelze entsteht eine feste Verbindung zwischen dem Befestigungselementmaterial und dem Lagereinrichtungsmaterial.

Die Schweissverbindung ist in einem Schweissbereich angeordnet, wobei die Schweissverbindung nicht den gesamten Schweissbereich umfassen muss. Der Schweissbereich verläuft entlang einer Berührungsfläche zwischen dem Befestigungselementmaterial des zweiten Befestigungselements und dem Lagereinrichtungsmaterial einer der beiden Lagereinrichtungen, in welchem das Erstellen einer Schweissverbindung möglich ist.

Die Schweissverbindung sorgt somit dafür, dass das zweite Befestigungselement und zumindest eine der beiden Lagereinrichtungen in der elektrischen Antriebskomponente miteinander mechanisch verbunden sind. Die Schweissverbindung wird dabei nach anlegen einer Vorspannung auf zumindest einer der beiden Lagereinrichtungen erstellt, somit sind nach dem Schweissvorgang die beiden Lagereinrichtungen dauerhaft gegeneinander vorgespannt. Dadurch werden Federelemente zum Aufbringen einer Vorspannung oder Axialringsicherungen unnötig und axiale Eigenschwingungen im Betrieb der elektrischen Antriebskomponente verhindert. Somit ist eine leichte, elektrische Antriebskomponente mit wenigen Bauteile und mit einer hohen Leistungsfähigkeit herstellbar. Die elektrische Antriebskomponente kann als Motor und/oder auch als Getriebe ausgebildet sein. Insbesondere weisen bei einem Aussenläufermotor die beweglichen Bauteile ein hohes Eigengewicht im Verhältnis zum Gesamtaufbau des Aussenläufermotors auf. Die Vorspannung an den Lagereinrichtungen schützt den Elektromotor und die Lagereinrichtungen vor einem axialen Schwingen und gleichzeitig ist das Eigengewicht der beweglichen Bauteile aufgrund der nicht benötigten Federelemente oder Axialringsicherungen reduziert.

Die elektrische Antriebskomponente ist insgesamt robuster und bleibt auch bei äusseren Krafteinwirkungen, wie beispielsweise Schlägen, betriebsstabil. Das zuvor beschriebene Verfahren kann eine geringere Anzahl an Herstellschritten aufweisen, als die aus dem Stand der Technik bekannten Verfahren für vergleichbare elektrische Antriebskomponenten. Das Verfahren vereinfacht die Herstellung einer elektrischen Antriebskomponente wobei Standartkomponenten verwendet werden können und ist somit kostengünstiger.

Insbesondere sind die mindestens zwei Lagereinrichtungen Wälzlagereinrichtungen, an denen einfach eine Vorspannkraft eingeleitet werden kann. Das Anlegen einer geringen Vorspannkraft verhindert Schwingungen oder Schläge zwischen den Wälzkörpern und den Lagerschalen, so dass deren Laufruhe oder Lebensdauer verbessert wird. Zu den Wälzlagereinrichtungen werden hier vorliegend insbesondere Kugellagereinrichtungen, Rollenlagereinrichtungen, Kreuzlagereinrichtungen und Nadellagereinrichtungen gezählt. Die Vorspannung in der elektrischen Antriebskomponente bewirkt ein Anliegen der Kugeln, Rollen oder Nadeln am Aussenring der Lagereinrichtung, sodass eine axiale Bewegung in der Lagereinrichtung unterbunden ist und damit die Laufruhe der Lagereinrichtungen verbessert ist. Eine axiale Stabilität der Lagereinrichtungen erhöht die Leistungsfähigkeit und Lebensdauer der elektrischen Antriebskomponente im Betrieb.

Durch das Vorspannen kann das axiale Spiel der elektrischen Antriebskomponente reduziert werden. Durch die Reduktion des axialen Spiels lässt sich beispielsweise direkt das axiale Ende der elektrischen Antriebskomponente durch einen magnetischen oder optischen Encoder erfassen und die Position beziehungsweise Drehzahl des Rotors ermitteln.

Vorzugsweise wird zumindest eine der beiden Lagereinrichtungen bei wirkender Vorspannkraft mit dem zweiten Befestigungselement in einem weiteren Schweissbereich verschweisst, wodurch zumindest eine weitere Schweissverbindung zwischen einem Befestigungselementmaterials des zweiten Befestigungselements mit einem Lagereinrichtungsmaterials einer der beiden Lagereinrichtungen entsteht. Insbesondere bei einer erhöhten Vorspannkraft kann eine weitere Schweissverbindung die Zuverlässigkeit der Verbindung zwischen Lagereinrichtung und zweiten Befestigungselement erhöhen. Dadurch wird eine erhöhte Stabilität in der elektrischen Antriebskomponente unter Last gewährleistet. Ein Versagen der Schweissverbindungen ist beispielsweise durch eine auftretende Laufunruhe oder schwankende Antriebsströme in der elektrischen Antriebskomponente erkennbar.

Insbesondere wird zumindest eine der beiden Lagereinrichtungen bei wirkender Vorspannkraft mit dem zweiten Befestigungselement in einem dritten Schweissbereich verschweisst, wodurch zumindest eine dritte Schweissverbindung mit einem dritten Schweissbereich des Befestigungselementmaterials des zweiten Befestigungselements sowie einem dritten Schweissbereich des Lagereinrichtungsmaterials einer der beiden Lagereinrichtungen entsteht. Dadurch wird eine erhöhte Stabilität in der elektrischen Antriebskomponente gewährleistet und Vibrationen im Betrieb weiter unterdrückt. Beispielsweise ist die elektrische Antriebskomponente gegen äussere Krafteinwirkungen, wie beispielsweise abrupte Schläge, im Betrieb verbessert geschützt.

Schweissverbindungen haben gegenüber bspw. Klebeverbindungen den weiteren Vorteil, dass selbst, wenn eine der Schweissverbindungen Risse aufweisen würde, welche durch abrupte Schläge im Betrieb der elektrischen Antriebskomponente sich weiter ausbilden könnten, würden sich die geschweisste Lagereinrichtung im Bereich der Schweissverbindungen mit dem zweiten Befestigungselement derart verkeilen, dass durch die keilförmige und poröse Rissstelle sich die Teile axial praktisch nicht gegeneinander verschieben können. Damit bleibt die Laufstabilität in der elektrischen Antriebskomponente gesichert. Bei der Überwachung bspw. der Laufruhe der elektrischen Antriebskomponente bspw. durch Erfassen von Vibrationen oder von Schwankungen in der Stromaufnahme der elektrischen Antriebskomponente, könnte ein derartiger Fehler erkannt und die elektrische Antriebskomponente im Rahmen von Unterhaltsarbeiten ersetzt werden.

Vorteilhaft weist zumindest eines der beiden Befestigungselemente ein Gegenstück auf, an dem zumindest eine der beiden Lagereinrichtungen vor Einleiten der Vorspannkraft in Anlage gebracht wird, sodass die eingeleitete Vorspannkraft gleichmässig auf beide Lagereinrichtungen wirkt. Das Gegenstück kann ein Anschlag an einem der beiden Befestigungselement sein, sodass beispielsweise die erste Lagereinrichtung einfach und positionssicher in Anlage gebracht ist.

Insbesondere ist das Gegenstück beabstandet vom gegenüberliegend wirkenden Befestigungselement angeordnet, sodass die am Gegenstück angeordnete Lagereinrichtung stabil in Anlage gebracht ist. Damit ist die eingeleitete Vorspannkraft ausreichend gleichmässig in der elektrischen Antriebskomponente auf die beiden Lagereinrichtungen verteilt. Insbesondere ist die Festigkeit des Gegenstücks derart stark ausgebildet, sodass das Gegenstück zumindest die Kraft der eingeleiteten Vorspannkraft tragen kann, ohne dass sich die beiden Befestigungselemente berühren müssen.

Bevorzugt weist zumindest das Befestigungselementmaterial des ersten oder zweiten Befestigungselements einen niedrigeren Kohlenstoffgehalt (weniger als 0.035%, bevorzugt weniger als 0.01%) auf, sodass eine gute Schweisseignung gegeben ist. Vorteilhaft umfasst das erste oder zweite Befestigungselementmaterial einen nichtrostenden austenitischen Stahl, der eine besonders gute Schweisseignung aufgrund der reduzierten Kohlenstoffkonzentration aufweist.

Bevorzugterweise ist das erste Befestigungselement eine Welle der elektrischen Antriebskomponente und das zweite Befestigungselement ist ein Gehäuseteil für die Lagereinrichtungen, wobei zumindest eine Schweissverbindung zwischen einem Gehäuseteilmaterial des Gehäuseteils und dem Lagereinrichtungsmaterial einer der beiden Lagereinrichtungen entsteht. Die Schweissverbindung zwischen dem Gehäuseteil und der Lagereinrichtung ist weiter von einem Rotationszentrum der Welle entfernt als die Verbindung zwischen Welle und Lagereinrichtung, dadurch lässt sich die Schweissverbindung einfacher erstellen. Durch die grössere Entfernung zum Rotationszentrum (Radius) ergibt sich ein längeres Kreisringsegment. Durch das längere Kreisringsegment ist es möglich, eine längere Schweissnaht und dadurch eine länger Schweissverbindung zwischen dem Gehäuseteil bzw. einem Gehäuseteilmaterial und der Lagereinrichtung bzw. einem Lagereinrichtungsmaterial auszuführen. Somit wird mehr Material verschweisst, wodurch die Zuverlässigkeit der Schweissverbindung erhöht wird. Zusätzlich kann mehr Material die thermische Energie beim Schweissen aufnehmen, wodurch geringere Temperaturspitzen im Material entstehen, welche zu Beschädigungen bspw. der Lagereinrichtungen führen können.

Die eingeleitete Vorspannungskraft wirkt dabei auf beide Lagereinrichtungen und auf die Welle, sodass die zumindest eine Lagereinrichtung vorgespannt mit dem Gehäuseteil einfach und reproduzierbar verschweissbar ist.

Das Gehäuseteil kann Teil des Stators der elektrischen Antriebskomponente sein, beziehungsweise mit dem Stator der elektrischen Antriebskomponente fest verbunden sein. Das Gehäuseteil ist im Bereich, in welchem erste und zweite Lagereinrichtungen angeordnet sind, bevorzugt einstückig ausgeführt. Die erste und zweite Lagereinrichtungen können in einer alternativen Ausführungsform auch in je einem Gehäuseteil angeordnet sein, dabei sollten die beiden Gehäuseteile jedoch vor dem verschweissen des zweiten Befestigungselementes mit dem Lagereinrichtungsmaterial dauerhaft und fest, beispielsweise mit einem Flansch, miteinander verbunden werden, damit die Vorspannung über die fest miteinander verbundenen Gehäuseteile erhalten bleibt und sich nicht durch eine Verschiebung der Gehäuseteile gegeneinander verändert.

Wie vorgängig beschrieben ist auch die Welle bevorzugt im Bereich der ersten und zweiten Lagereinrichtungen einstückig. Die erste und zweite Lagereinrichtungen können alternativ dazu auch auf je einer Wellenteil angeordnet sein, dabei sollten die beiden Wellenteile jedoch vor dem verschweissen des zweiten Befestigungselementes mit dem Lagereinrichtungsmaterial dauerhaft und fest, beispielsweise durch Verschraubung oder einen Flansch, miteinander verbunden werden, damit die Vorspannung über die fest miteinander verbundenen Wellenteile erhalten bleibt und sich nicht durch eine Verschiebung der Wellenteile gegeneinander verändert.

Bevorzugterweise kann die Welle auch eine Hülse für die Welle umfassen. Die Hülse für die Welle wird typischerweise um die Welle angeordnet und sitzt im Betrieb spielfrei auf der Welle. Die Hülse für die Welle kann die Produktion der elektrischen Antriebskomponente vereinfachen oder einen für die Schweissung optimierten Kohlenstoffgehalt aufweisen.

Vorzugsweise wirkt die Schweissverbindung zwischen dem Gehäuseteil und einem Aussenring einer der beiden Lagereinrichtungen stoffschlüssig. Auf Zusatzmaterialien oder Zusatzelemente kann beim Schweissen vollständig verzichtet werden, sodass eine kompakte und zuverlässige Verbindung geschaffen ist. Die Laufleistung der Lagereinrichtung bleibt unverändert.

Die zumindest eine zu schweissende Lagereinrichtung umfasst insbesondere ein hartes Material mit einem hohen Anteil an Kohlenstoff (hier 0.99%), der die Härtbarkeit der Lagereinrichtung erhöht. Derartige Lagereinrichtungen sind robust und langlebig. Bevorzugt wird daher das Material 100Cr6 als Lagereinrichtungsmaterial verwendet.

Insbesondere wirkt die Schweissverbindung an der Längserstreckung des Aussenrings einer der beiden Lagereinrichtungen stoffschlüssig. Damit schliesst die Schweissverbindung einen höheren Anteil an Lagereinrichtungsmaterial der Lagereinrichtung ein, sodass die Stabilität der Schweissverbindung verbessert ist.

Bevorzugt wirkt die Schweissverbindung an einer Aussenringaussenkante einer der beiden Lagereinrichtungen stoffschlüssig. Das Verschweissen der zu schweissenden Lagereinrichtung an der Aussenringaussenkante ermöglicht ein hinreichendes Einbringen des Lagereinrichtungsmaterials der zu schweissenden Lagereinrichtung in die Schweissverbindung. Der Wärmeeintrag in das Lagereinrichtungsmaterial beim Schweissen ist hinreichend hoch, sodass eine zuverlässige Schweissverbindung entsteht und Risse in der Schweissverbindung verhindert sind.

Vorteilhaft wird die Kraftwirkung der eingeleiteten Vorspannkraft auf den Aussenring einer der beiden Lagereinrichtungen eingeleitet. Die Vorspannkraft kann über die beiden Lagereinrichtungen und zumindest eines der beiden Befestigungselemente gleichmässig verteilt eingeleitet werden, sodass eine verbesserte Schweissverbindung entsteht. Dies ist besonders vorteilhaft, wenn die zumindest eine Lagereinrichtung bereits fest auf der Antriebswelle sitzt.

In einer alternativen Ausführungsform der Erfindung ist das erste Befestigungselement ein Gehäuseteil für die Lagereinrichtungen und das zweite Befestigungselement eine Welle der elektrischen Antriebskomponente, wobei zumindest eine Schweissverbindung zwischen einem Wellenmaterial der Welle mit dem Lagereinrichtungsmaterial einer der beiden Lagereinrichtungen entsteht. Die eingeleitete Vorspannungskraft wirkt dabei auf beide Lagereinrichtungen und den Gehäuseteil, sodass die zumindest eine Lagereinrichtung vorgespannt mit der Welle einfach und positionssicher verschweissbar ist.

Vorteilhaft kann das Gehäuseteil auch eine Hülse für das Gehäuseteil umfassen. Eine Hülse für das Gehäuseteil kann um oder in dem Gehäuseteil angeordnet sein und sitzt im Betrieb spielfrei auf dem Gehäuseteil. Die Hülse ist bevorzugt in jenem Bereich des Gehäuseteils angeordnet, in welchem zumindest einer der beiden Lagereinrichtung angeordnet wird. Die Hülse für den Gehäuseteil kann die Produktion des Antriebes vereinfachen oder einen für die Schweissung optimierten Kohlenstoffgehalt aufweisen.

Insbesondere ist die Welle derart angeordnet, dass zumindest ein Fünftel der Wellenlänge sich über zumindest eine der beiden Lagereinrichtungen hinaus erstreckt. Damit sind die beiden Lagereinrichtungen sicher an der Welle fixierbar und die eingeleitete Vorspannkraft einfach einleitbar.

Insbesondere ist die Länge der Welle zumindest 1.5-Mal länger als der Abstand der beiden Lagereinrichtungen, sodass die beiden Lagereinrichtungen stabil an der Welle angeordnet sind.

Vorteilhaft sind die beiden Lagereinrichtungen in mittelbarer oder unmittelbarer Anlage an der Welle angeordnet. Während des Herstellens der elektrischen Antriebskomponente wirkt die eingeleitete Vorspannkraft direkt auf die erste und die zweite Lagereinrichtung, sofern die beiden Lagereinrichtungen sich unmittelbar in Anlage befinden. Alternativ dazu kann die eingeleitete Vorspannkraft an zumindest eine der beiden Lagereinrichtungen eingeleitet werden und wird dann über weitere Bauteile, beispielsweise über die Welle oder einem Gehäuseteil, auf die andere Lagereinrichtung übertragen, sodass, nach dem Erstellen der ersten Schweissverbindung, an beiden Lagereinrichtungen eine gleichmässige Vorspannung vorliegt.

Vorzugsweise wird die zumindest eine Schweissverbindung durch zumindest eine Schweissnaht erzeugt, welche ein Kreisringsegment ausbildet. Das Kreisringsegment ist in dem Schweissbereich angeordnet. Das Schweissen von Kreisringsegmenten ist schnell und einfach realisierbar und daher kostengünstiger. Im einfachsten Fall kann eine Schweissverbindung eine Punktschweissverbindung sein, welche bspw. durch Pulsschweissen bspw. durch eine Laserpuls erzeugt wird. Beim Pulsschweissen wird, gegenüber einem kontinuierlichen Schweissen, weniger Energie in das umliegende Material eingebracht, wodurch dieses wenig erwärmt und damit geschont wird. Beim Pulsschweissen muss das Material gut schweissgeeignet sein. Durch Pulsschweissen wird ein Schweisspunkt als Schweissverbindung erzeugt. Mehrer aneinandergereihte Schweisspunkte können eine Schweissnaht ergeben. Die Schweissnaht kann aber auch durch kontinuierliches Schweissen erzeugt werden.

Kurze Schweissnähte sind hinreichend stabil, da die statischen Anforderungen, insbesondere bei geringer Vorspannung, für die Schweissung übertroffen sind und die verschweisste Fläche reduziert ist. Insbesondere weist zumindest die erste Schweissnaht eine Schweissnahtlänge von mindestens 0.5 mm auf. Ferner weisst die Schweissnaht insbesondere einen Schweissnahtdurchmesser bzw. eine Schweissnahtbreite weniger als 0.5 mm, bevorzugt weniger als 0.25 mm, auf. Dadurch sind ausreichend viel Materialien miteinander verschweisst, um eine stabile Schweissnaht herzustellen.

Insbesondere erstreckt sich das Kreisringsegment 20° bis 90°entlang eines Kreisrings an einer der beiden Lagereinrichtungen. Dabei ergibt sich eine stabile und lange Schweissnaht mit dem zweiten Befestigungselement und einem der beiden Lagereinrichtungen.

Bevorzugt ist ein Kreisringsegment von 40° ausgebildet. Das Kreisringsegment ist ein Abschnitt des Kreisrings. Der Kreisring verläuft entlang der Verbindungslinie zwischen einer Lagereinrichtung und dem zweiten Befestigungselements. Der Kreisring verläuft somit zwischen einem Aussenring einer zweiten Lagereinrichtung und einem Gehäuseteil oder einem Aussenring einer ersten Lagereinrichtung und dem Gehäuseteil. Der Kreisring kann auch zwischen einem Innenring der zweiten Lagereinrichtung und der Welle oder zwischen einem Innenring der ersten Lagereinrichtung und der Welle verlaufen.

Bevorzugt erstreckt sich das Kreisringsegment 40° entlang eines Kreisrings an einer der beiden Lagereinrichtungen. Dabei ergibt sich eine ausreichend lange Schweissnaht mit dem zweiten Befestigungselement und einem der beiden Lagereinrichtungen, welche hinreichend stabil ist.

Insbesondere wird zumindest eine Schweissnaht sequenziell mit zumindest zwei Schweisszyklen geschweisst, sodass die zumindest eine Schweissnaht, die zumindest eine Lagereinrichtung stabil mit dem zweiten Befestigungselement verbindet und der Wärmeeintrag zumindest in die Lagereinrichtung minimiert ist.

Insbesondere umfasst die Schweissnaht drei Kreisringsegmente. Die drei Kreisringsegmente können beispielsweise in drei Schweissverbindungsabschnitten bzw. Schweissnahtsegmenten mit unterschiedlicher Positionierung unterteilt werden. Schlussendlich werden drei Schweissverbindungsabschnitte zu je bspw. 10° in je einem Kreisringsegmente über den Umfang gleichmässig verteilt mit einer Schweissstrahlausrichtung auf die Mitte des Spaltes zwischen dem zweiten Befestigungselement und der Lagereinrichtung geschweisst. Weiter werden nochmal drei Schweissverbindungsabschnitte geschweisst mit Schweissstrahlausrichtung 0.05-0.10mm vom Spalt hin zu der Lagereinrichtung. Ferner können nochmals drei Schweissverbindungsabschnitte mit Schweissstrahlausrichtung 0.05-0.10mm vom Spalt hin zu dem zweiten Befestigungselement geschweisst werden. Die einzelnen Schweissverbindungsabschnitte der Kreisringsegmente können beispielsweise zueinander beabstandet sein, sodass sie sich nicht berühren. Ziel ist es Herstellabweichungen und Toleranzen besser aufzufangen und mit mindestens einem der Schweissverbindungsabschnitte eine gute Schweissung zu erzielen, damit weniger Aufwand beim Ausrichten anfällt und dennoch der Ausschuss reduziert wird. Die kurzen Schweissungen funktionieren insbesondere daher, da die statischen Anforderungen an die Schweissverbindung bei weitem übertroffen werden und daher die verschweissten Flächen bzw. Schweissverbindungen reduziert werden können.

Bevorzugterweise besteht das Kreisringsegment aus zumindest zwei Schweissverbindungsabschnitten, wobei die zumindest zwei Schweissverbindungsabschnitten entlang des Umfangs des Aussenrings der Lagereinrichtung oder des Innenrings der Lagereinrichtung angeordnet sind. Die zumindest zwei Schweissverbindungsabschnitten können nebeneinander angeordnet sein. Der Schweissstrahl wird mittig am Fügespalt ausgerichtet. Damit ist sichergestellt, dass die Schweissnaht an hinreichend vielen Schweissverbindungsabschnitten sowohl das Lagereinrichtungsmaterial als auch das Befestigungselementmaterial umfasst.

Ein Schweissverbindungsabschnitt bzw. ein Schweissnahtsegment ist Teil eines Kreisringsegmentes und kann durch zumindest eine Schweissnaht oder durch einen oder mehrere Schweisspunkte erzeugt werden. Ein Schweissverbindungsabschnitt kann einen immer gleichen radialen Versatz der Schweissverbindung zum Rotationszentrum der Welle aufweisen. Ein Schweissverbindungsabschnitt erstreckt sich 10° bis 40°, bevorzugt 20 bis 30°, entlang eines Kreisrings.

Insbesondere weisen die zumindest zwei Schweissverbindungsabschnitte einen radialen Versatz von zumindest 0.1 % des Radius des Aussenrings der Lagereinrichtung zueinander auf. Damit sind herstellerbehaftete Dimensionsabweichungen bzw. Toleranzen der Lagereinrichtung und der Befestigungselemente auffangbar, sodass sicherstellbar ist, dass mit mindestens einem Schweissverbindungsabschnitt eine hinreichend gute Schweissverbindung erzeugt ist. Darüber hinaus kann der Aufwand beim Ausrichten der elektrischen Antriebskomponente reduziert werden und gleichzeitig der Ausschuss an fehlerhaften elektrischer Antriebskomponenten reduziert werden.

Bevorzugt besteht das Kreisringsegment aus drei Schweissverbindungsabschnitten, wobei die Schweissverbindungsabschnitte einen radialen Versatz von zumindest 0.1% des Radius des Aussenrings der Lagereinrichtung zueinander aufweisen. Damit kann sichergestellt werden, dass sich die Schweissnaht an mehreren Schweissverbindungsabschnitten ausserhalb der Mitte des Fügespalts befindet und sowohl das Lagereinrichtungsmaterial der Lagereinrichtung als auch das Befestigungselementmaterial des Befestigungsmaterials umfasst.

Vorteilhaft wird in jedem der drei Bereiche drei Mal, oder zwei Mal, geschweisst, wobei beispielsweise die ersten drei Schweissverbindungsabschnitte mit einer Schweissstrahlausrichtung auf die Mitte des Fügespalt ausgerichtet erfolgen, und anschliessend die nachfolgenden drei Schweissverbindungsabschnitte in jedem der Schweissbereiche je mit einer Schweissstrahlausrichtung 0.05-0.10mm näher an der Lagereinrichtung erfolgen. Die dritten Schweissverbindungsabschnitte in jedem der drei Schweissbereiche werden insbesondere je mit einer Schweissstrahlausrichtung 0.05-0.10mm näher am zweiten Befestigungselement durchgeführt. Die zuvor beschriebenen Schritte können auch an Kreisringsegmenten mit weniger als drei oder auch mehr als drei Schweissverbindungsabschnitte vollzogen werden. Damit sind herstellerbehaftete Dimensionsabweichungen der Lagereinrichtung auffangbar, sodass eine fehlerhafte Schweissverbindung ausgeschlossen ist und kein Ausschuss der elektrischen Antriebskomponenten aufgrund einer fehlerhaften Schweissverbindung vorhanden ist.

Vorzugsweise umfasst zumindest eine der Schweissverbindungen weniger als 40% des Lagereinrichtungsmaterials einer der beiden Lagereinrichtungen. Der restliche Anteil an der Schmelze einer Schweissverbindung kann bspw. aus einem Befestigungselementmaterial bestehen. Beim Schweissen ist der hohe Anteil an Kohlenstoff im zu schweissenden Material ein Nachteil, da sehr kurzzeitig und örtlich begrenzt eine hohe Wärmeenergie in die zu schweissende Lagereinrichtung eingebracht wird. Im Normalfall härten sich Schweissnähte an Lagereinrichtungen so weit aus, dass sie bereits durch das Schrumpfen beim Abkühlen rissig werden, zudem würde eine zu starke Erwärmung der Lagereinrichtung zu einem Verzug und damit zu einer verringerten Laufruhe oder Lebensdauer führen. Das Reduzieren des Anteils des Lagereinrichtungsmaterials an der Schmelze für die zumindest eine Schweissverbindung vermindert die Rissbildung in der Schweissverbindung.

Vorzugsweise umfasst zumindest eine der Schweissverbindungen weniger als 20% des Lagereinrichtungsmaterials einer der beiden Lagereinrichtungen. Das weitere Reduzieren des Anteils des Lagereinrichtungsmaterials für die zumindest eine Schweissverbindung, verhindert die Rissbildung in der Schweissverbindung. Somit kann durch das weitere erhöhen des Materials der Schmelze, welches nicht Lagereinrichtungsmaterial ist, ein Ausschuss der Schweissverbindung bzw. der Bauteile vermeiden werden.

Bevorzugterweise wird zumindest eine der Schweissverbindungen mit einem Schmelzschweissverfahren durch Strahlung erzeugt. Auf Zusatzmaterialien oder Zusatzelemente kann verzichtet werden. Beispielsweise wird eine Laserschweisstechnik oder eine Elektronenstrahlschweisstechnik verwendet. Der Schweissstahl beim Laserschweissen weist einen hinreichend grossen Strahldurchmesser auf, sodass Herstellertoleranzen der Lagereinrichtungen abgefangen werden und eine hinreichend stabile Schweissverbindung erstellbar ist. Der Schweissstahl der Elektronenstrahlschweisstechnik weist einen geringen Strahldurchmesser auf, sodass eine dünnere Schweissnaht erzeugbar ist. Die thermische Energie kann durch einen Schweissstrahl in einem sehr kleinen Radius beinahe punktförmig eingebracht werden, wodurch sich sehr präzise und lokal das Material des Befestigungselements und der Lagereinrichtung aufschmelzen lassen. Durch die präzise Aufschmelzung kann der Anteil des Materials der Lagereinrichtung an der gesamten Schmelze relativ genau bestimmt werden.

Insbesondere wird der Schweissstrahl zwischen der Aussenringaussenkante einer der beiden Lagereinrichtungen und dem Gehäuseteil gerichtet. Damit kann sichergestellt werden, dass sowohl das Lagereinrichtungsmaterial als auch das Gehäuseteilmaterial des Gehäuseteils oder das Hülsenmaterial der Hülse des Gehäuses zur Schweissverbindung beitragen.

Alternativ oder ergänzend wird der Schweissstrahl zwischen einer Innenringaussenkante eines der beiden Lagereinrichtungen und der Welle gerichtete. Damit kann sichergestellt werden, dass sowohl das Lagereinrichtungsmaterial als auch ein Wellenmaterial der Welle oder das Hülsenmaterial der Hülse der Welle zur Schweissverbindung beitragen.

Vorzugsweise weist die Vorspannkraft einen Betrag von 1 Newton bis 500 Newton auf. Damit kann eine hinreichend grosse Vorspannung in der elektrischen Antriebskomponente erzeugt werden.

Vorzugsweise weist die Vorspannkraft einen Betrag von 20 Newton bis 90 Newton, besonders bevorzugt einen Betrag von ca. 50 Newton auf. Damit kann eine ausreichend grosse Vorspannung in der elektrischen Antriebskomponente erzeugt werden, sodass der elektrische Antrieb spielfrei ist und die elektrische Antriebskomponente geschont wird. Eine hohe Vorspannung kann den Wirkungsgrad der elektrischen Antriebskomponente aufgrund der Lagerreibung reduzieren. Weiter kann durch eine zu hohe Vorspannung die Lebensdauer des Lagers reduziert werden, da sich bspw. der Abrieb im Lager erhöht. Die Vorspannkraft ist die verbleibende Vorspannkraft, welche nach dem Erstellen der Schweissverbindung und dem Entfernen der Herstellvorrichtung zwischen den beiden Lagereinrichtungen anliegt. Im Idealfall entspricht diese der angelegten Vorspannkraft während dem Erstellen der Schweissverbindung.

Bevorzugterweise wird die erste Lagereinrichtung mit dem ersten Befestigungselemente verpresst. Das Verpressen der ersten Lagereinrichtung an dem ersten Befestigungselemente positioniert die erste Lagereinrichtung örtlich in der elektrischen Antriebskomponente, bevor die Vorspannkraft eingeleitet wird. Die Lagereinrichtung sollte kraftschlüssig und dauerhaft mit dem ersten Befestigungselement verbunden sein, sodass sich nach dem Anlegen der Vorspannung nicht die Lagereinrichtung gegenüber dem ersten Befestigungselement verschiebt und die Vorspannung verändert bzw. reduziert wird. Die Verbindung der ersten Lagereinrichtung mit dem ersten Befestigungselement sollte vor dem Verbinden mit dem zweiten Befestigungselement erfolgen.

Alternativ oder ergänzend wird die zweite Lagereinrichtung mit dem ersten Befestigungselemente verpresst. Das Verpressen der zweiten Lagereinrichtung an dem ersten Befestigungselemente positioniert auch die zweite Lagereinrichtung örtlich in der elektrischen Antriebskomponente, bevor die Vorspannkraft eingeleitet wird, sodass eine gleichmässig verteilte Vorspannung in der elektrischen Antriebskomponente erzeugbar ist. Die zweite Lagereinrichtung sollte ebenfalls kraftschlüssig und dauerhaft mit dem ersten Befestigungselement verbunden sein. Die Verbindung der zweiten Lagereinrichtung mit dem ersten Befestigungselement sollte vor dem Verbinden mit dem zweiten Befestigungselement erfolgen.

Insbesondere wird zumindest eine der beiden Lagereinrichtungen mit dem ersten Befestigungselemente verklebt. Die Klebung dient zu Montagezwecken damit sich die zumindest eine Lagereinrichtung während der Herstellung der elektrischen Antriebskomponente nicht verschiebt und an einer unpassenden Position verklemmt.

Bevorzugterweise wird an der Schweissnaht eine konkave Nahtoberfläche erzeugt. Wenn bei der Schweissung kein Zusatzmaterial verwendet wird, wird die Schweissfuge nicht, bzw. nicht komplett mit Schmelze aufgefüllt. Dies führt zu einer unterwölbten (konkaven) Schweissnaht. Beim Schweissvorgang wird lediglich das Befestigungselementmaterial des zweiten Befestigungselements und das Lagereinrichtungsmaterial einer der beiden Lagereinrichtungen aufgeschmolzen und ohne Zusatzmaterial bspw. in Form eines Drahtes, eines aufgesetzten Ringes oder eingesprühten Pulvers, miteinander verbunden.

Bevorzugterweise wird die Schweissnaht mit einer Schweissnahtbreite von weniger als 0.5 mm, insbesondere eine Schweissnahtbreite von weniger als 0.25 mm erzeugt. Die Schweissnahtbreite bezieht sich auf die Breite der Schweissnaht an der Oberfläche der Schweissnaht. Durch eine dünne Schweissnaht wird während des Schweissprozesses wenig thermische Energie in die Verbindung eingetragen. Dadurch ist die thermische Belastung insbesondere für die Lagereinrichtung geringer, wodurch Schäden an der Lagereinrichtung vermieden werden.

Ein erfindungsgemässe elektrische Antriebskomponente umfasst zumindest ein erstes Befestigungselement, wobei an dem ersten Befestigungselement zumindest eine erste und eine zweite Lagereinrichtung vorgespannt angeordnet sind. Die Vorspannung wirkt aufgrund zumindest einer Schweissverbindung zwischeneinem Befestigungselementmaterial eines zweiten Befestigungselements mit einem Lagereinrichtungsmaterial einer der beiden Lagereinrichtungen.

Die Vorspannung verhindert ein axiales Schwingen der Lagereinrichtungen und der an der Lagereinrichtung angeordneten Bauteile in der elektrischen Antriebskomponente während des Betriebs, sodass die elektrische Antriebskomponente spielfrei ist. Die Schweissverbindung sorgt somit dafür, dass das zweite Befestigungselement und einer der beiden Lagereinrichtungen vorgespannt in der elektrischen Antriebskomponente miteinander mechanisch verbunden sind. Dadurch werden Federelemente zum Aufbringen einer Vorspannung oder Axialringsicherungen unnötig und axiale Eigenschwingungen im Betrieb der elektrischen Antriebskomponente verhindert. Die elektrische Antriebskomponente kann als Motor oder auch als Getriebe ausgebildet sein. Die elektrische Antriebskomponente ist insgesamt robuster und bleibt auch bei äusseren Krafteinwirkungen, wie beispielsweise Schläge, betriebsstabil, sodass die Leistungsfähigkeit der elektrischen Antriebskomponente verbessert ist. Insbesondere ist die Schweissverbindung unter Einbringung einer Vorspannkraft gemäss einem der zuvor genannten Verfahren hergestellt.

Insbesondere sind die beiden Lagereinrichtungen eine erste und zweite Wälzlagereinrichtung. Die Vorspannung in der elektrischen Antriebskomponente bewirkt ein Anliegen der Wälzkörper am Aussenring und am Innenring der Lagereinrichtungen, sodass eine axiale Bewegung in den Lagereinrichtungen unterbunden ist und damit die Laufruhe der Lagereinrichtungen verbessert ist. Eine axiale Stabilität der Lagereinrichtungen erhöht die Leistungsfähigkeit und die Lebensdauer der elektrischen Antriebskomponente im Betrieb.

Bevorzugterweise ist das erste Befestigungselement die Welle der elektrischen Antriebskomponente und das zweiten Befestigungselement ist ein Gehäuseteil für eine der beiden Lagereinrichtungen. Zusätzlich kann eine Hülse an der Welle der elektrischen Antriebskomponente angeordnet sein. Die eingeleitete Vorspannungskraft wirkt dabei auf die beiden Lagereinrichtungen und die Welle, sodass zumindest eine der Lagereinrichtung vorgespannt mit dem Gehäuseteil positionssicher und reproduzierbar verschweissbar ist.

Alternativ dazu ist das erste Befestigungselement ein Gehäuseteil für die Lagereinrichtungen und das zweite Befestigungselement ist die Welle. Die eingeleitete Vorspannungskraft wirkt dabei auf die beiden Lagereinrichtungen und den Gehäuseteil, sodass zumindest eine der Lagereinrichtungen vorgespannt mit der Welle positionssicher und reproduzierbar verschweissbar ist.

Vorzugsweise weist die zumindest eine Schweissverbindung zumindest eine Schweissnaht auf, welche ein Kreisringsegment ausbildet. Das Schweissen von Kreisringsegmenten ist schnell und einfach realisierbar und daher kostengünstig. Im einfachsten Fall kann das Kreisringsegment eine Punktschweissverbindung sein. Die kurzen Schweissnähte sind hinreichend stabil, da aufgrund geringer Vorspannkräfte die statischen Anforderungen für die Schweissverbindung relativ gering sind, kann die verschweisste Fläche relativ klein sein.

Insbesondere erstreckt sich das Kreisringsegment 20° bis 90°entlang eines Kreisrings an einer der beiden Lagereinrichtungen. Dabei ergibt sich eine stabile und genügend lange Schweissnaht mit dem Befestigungselementmaterial des zweiten Befestigungselements und dem Lagereinrichtungsmaterial einer der beiden Lagereinrichtungen.

Bevorzugt erstreckt sich das Kreisringsegment 40° entlang eines Kreisrings an einer der beiden Lagereinrichtungen. Dabei ergibt sich eine hinreichend lange Schweissnaht mit dem Befestigungselementmaterial des zweiten Befestigungselements und dem Lagereinrichtungsmaterial einer der beiden Lagereinrichtungen, welche hinreichend stabil ist.

Bevorzugterweise besteht das Kreisringsegment aus zumindest zwei Schweissverbindungsabschnitten, wobei die zumindest zwei Schweissverbindungsabschnitte entlang des Umfangs des Aussenrings der Lagereinrichtung oder des Innenrings der Lagereinrichtung angeordnet sind. Die zumindest zwei Schweissverbindungsabschnitte könne nebeneinander angeordnet sein. Der Schweissstrahl wird mittig am Fügespalt ausgerichtet. Damit ist sichergestellt, dass die Schweissnaht an hinreichend vielen Schweissverbindungsabschnitten sowohl das Lagereinrichtungsmaterial als auch das Befestigungselementmaterial umfasst.

Ein Schweissverbindungsabschnitt kann durch zumindest je eine Schweissnaht erzeugt werden. Ein Schweissverbindungsabschnitt kann auch durch mehrere Schweisspunkte erzeugt werden. Ein Schweissverbindungsabschnitt kann einen immer gleichen radialen Versatz der Schweissverbindung zum Rotationszentrum der Welle aufweisen.

Insbesondere weisen die zumindest zwei Schweissverbindungsabschnitte einen radialen Versatz von zumindest 0.1 % des Radius des Aussenrings der Lagereinrichtung zueinander auf. Damit sind herstellerbehaftete Dimensionsabweichungen bzw. Toleranzen der Lagereinrichtung und der Befestigungselemente auffangbar, sodass sicherstellbar ist, dass mit mindestens einem Schweissverbindungsabschnitt eine hinreichend gute Schweissverbindung erzeugt ist. Darüber hinaus kann der Aufwand beim Ausrichten der elektrischen Antriebskomponente reduziert werden und dennoch der Ausschuss reduziert werden. Wie zuvor beschrieben, weist die elektrische Antriebskomponente in einer weiteren Ausführungsform zumindest ein Kreisringsegment mit drei Schweissverbindungsabschnitten auf. Darüber hinaus können die zwei oder drei Schweissverbindungsabschnitte auch mehrmals geschweisst sein.

Vorzugsweise ist die Schweissverbindung zwischen dem zweiten Befestigungselement und einem Aussenring einer der beiden Lagereinrichtungen angeordnet. Auf Zusatzmaterialien oder Zusatzelemente kann beim Schweissen vollständig verzichtet werden, sodass eine kompakte und zuverlässige Verbindung geschaffen ist. Die Laufleistung der Lagereinrichtung bleibt unverändert.

Insbesondere wirkt die Schweissverbindung an der Längserstreckung des Aussenrings einer der beiden Lagereinrichtungen stoffschlüssig. Damit schliesst die Schweissverbindung mehr Lagereinrichtungsmaterial der Lagereinrichtung entlang der Längserstreckung ein, sodass die Stabilität der Schweissverbindung verbessert ist.

Bevorzugt wirkt die Schweissverbindung an einer Aussenringaussenkante einer der beiden Lagereinrichtungen stoffschlüssig. Das Verschweissen der zu schweissenden Lagereinrichtung an der Aussenringaussenkante ermöglicht hinreichend viel Lagereinrichtungsmaterial von der zu schweissenden Lagereinrichtung in die Schweissverbindung einzubringen. Der Wärmeeintrag in das Lagereinrichtungsmaterial beim Schweissen ist hinreichend hoch, sodass eine zuverlässige Schweissverbindung entsteht und Heissrisse verhindert sind.

Bevorzugterweise ist die erste Lagereinrichtung mit dem ersten Befestigungselement verpresst. Das Verpressen der ersten Lagereinrichtung an dem ersten Befestigungselemente positioniert die erste Lagereinrichtung in der elektrischen Antriebskomponente, bevor die Vorspannkraft eingeleitet wird.

Alternativ oder ergänzend ist die zweite Lagereinrichtung mit dem ersten Befestigungselemente verpresst. Das Verpressen der zweiten Lagereinrichtung an dem ersten Befestigungselemente positionier auch die zweite Lagereinrichtung in der elektrischen Antriebskomponente, bevor die Vorspannkraft eingeleitet wird, sodass eine gleichverteilte Vorspannung in der elektrischen Antriebskomponente erzeugbar ist. Insbesondere ist eine der beiden Lagereinrichtungen axial fixiert, sodass ein axiales Spiel verhindert ist.

Bevorzugterweise weist die Schweissnaht eine konkave Nahtoberfläche auf. Wenn bei der Schweissung kein Zusatzmaterial verwendet wird, wird die Schweissfuge nicht, bzw. nicht komplett mit Schmelze aufgefüllt. Dies führt zu einer unterwölbten (konkaven) Schweissnaht. Beim Schweissvorgang wird lediglich das Befestigungselementmaterial des zweiten Befestigungselements und das Lagereinrichtungsmaterial einer der beiden Lagereinrichtungen aufgeschmolzen und ohne Zusatzmaterial bspw. in Form eines Drahtes, eines aufgesetzten Ringes oder eingesprühten Pulvers, miteinander verbunden.

Durch zusätzliches, besser schweissgeeignetes Material, bspw. einen aufgesetzten Ring, welcher auf die Lagereinrichtung aufgepresst wird, müsste ein zusätzliches Teil beschafft und in einem zusätzlichen Arbeitsschritt bspw. aufgepresst werden. Dies würden die Produktionskosten erhöht. Bevorzugt wird somit kein Zusatzmaterial zum Schweissen verwendet durch das fehlende Zusatzmaterial entsteht eine unterwölbte (konkave) Nahtoberfläche.

Bevorzugterweise weist die Schweissnaht eine Schweissnahtbreite von weniger als 0.5 mm, insbesondere eine Schweissnahtbreite von weniger als 0.25 mm auf. Die Schweissnahtbreite bezieht sich auf die Breite der Schweissnaht an der Oberfläche der Schweissnaht. Durch eine dünne Schweissnaht wird während des Schweissprozesses wenig thermische Energie in die Verbindung eingetragen. Dadurch ist die thermische Belastung insbesondere für die Lagereinrichtung geringer, wodurch Schäden an der Lagereinrichtung vermieden werden.

Eine erfindungsgemässe Herstellvorrichtung zum Herstellen einer elektrischen Antriebskomponente mit mindestens zwei vorgespannten Lagereinrichtungen, umfassend eine Haltevorrichtung zum Halten zumindest eines zweiten Befestigungselements, mit zumindest einem Mittel zum Aufbringen einer Vorspannkraft auf eine der beiden Lagereinrichtungen sowie eine Einrichtung zum Erstellen zumindest einer Schweissverbindung durch Schmelzschweissen mit Strahlung. Damit ist eine spielfreier elektrische Antriebskomponente, wie hier vorliegend beschrieben, herstellbar.

Die Haltevorrichtung kann eine Spannzange mit einem Anschlag umfassen, sodass die elektrische Antriebskomponente einfach aufnehmbar ist, sowie zentrierbar und axial positionierbar ist.

Zum Einleiten der Vorspannkraft kann ein Gewicht auf zumindest einem Auflagepunkt an zumindest eine der beiden Lagereinrichtungen wirken, sodass eine reproduzierbare Vorspannkraft erzeugbar ist. Damit sind die elektrischen Antriebskomponenten einfach in mehreren Serien mit gleichen Leistungsfähigkeiten herstellbar. Insbesondere wirkt das Gewicht auf drei Auflagepunkte an zumindest eine der beiden Lagereinrichtungen, sodass eine gleichmässigere Einleitung der Vorspannkraft ermöglicht ist.

Alternativ oder ergänzend kann eine Vorspannplatte verwendet werden, die an der elektrischen Antriebskomponente befestigbar ist und beispielsweise pneumatisch, hydraulisch, magnetisch, über Federn, durch Spannschrauben oder sonst mechanisch die notwendige Vorspannkraft reproduzierbar aufbringt.

Die Einrichtung zum Erstellen einer Schweissverbindung kann an einer Positioniereinrichtung angeordnet sein, welche mit der Halteeinrichtung verbunden sein kann. Dadurch kann der Schweissstrahl der Einrichtung positionsgenau eingestellt werden.

Ein erfindungsgemässer elektrischer Antrieb umfasst eine wie zuvor beschriebene elektrische Antriebskomponente, wobei die elektrische Antriebskomponente mindestens zwei Lagereinrichtungen umfasst und eine Vorspannung auf die beiden Lagereinrichtungen wirkt, wobei die Vorspannung aufgrund zumindest einer Schweissverbindung zwischen einem Befestigungselementmaterial des zweiten Befestigungselements mit einem Lagereinrichtungsmaterials einer der beiden Lagereinrichtungen, welche unter wirkender Vorspannkraft (Fv) verschweisst sind, wirkt.

Die Vorspannung verhindert ein axiales Schwingen in der elektrischen Antriebskomponente des elektrischen Antriebs während des Betriebs. Die Schweissverbindung sorgt somit dafür, dass das zweite Befestigungselement und eine der beiden Lagereinrichtungen vorgespannt in der elektrischen Antriebskomponente miteinander mechanisch verbunden sind. Dadurch werden Federelemente zum Aufbringen einer Vorspannung oder Axialringsicherungen unnötig und axiale Eigenschwingungen im Betrieb des elektrischen Antriebsverhindert. Damit ist eine leichter elektrische Antrieb mit weniger Bauteilen und mit einer hohen Leistungsfähigkeit und Lebensdauer herstellbar.

Ein elektrischer Antrieb umfasst neben den mechanischen Bestandteilen auch eine Steuerungseinrichtung zum Steuern des elektrischen Antriebs und kann eine Versorgungseinrichtung zum Versorgen des elektrischen Antriebs mit elektrischer Energie umfassen. Die Steuereinrichtung weist Steuerbefehle auf, die den elektrischen Antrieb mit einer erhöhten Leistungsfähigkeit antreiben lassen. Dies ist möglich, weil der wie zuvor beschriebene elektrische Antriebskomponente spielfrei ist und Eigenschwingung in dem elektrischen Antrieb verhindert wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Mittels der nachfolgenden Figuren wird anhand von Ausführungsbeispielen die Erfindung näher erläutert.

Positionsangaben, wie «oben», unten», «rechts» oder «links» sind jeweils auf die entsprechenden Darstellungen bezogen und sind nicht als einschränkend zu verstehen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Patentansprüche zu verlassen. Insbesondere umfasst die Erfindung ebenfalls Ausführungsformen mit jeglicher Kombination von Merkmalen, die vorliegend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind. Im Weiteren schliesst der Ausdruck "umfassen" und Ableitungen davon andere Elemente oder Schritte nicht aus. Ebenfalls schliesst der unbestimmte Artikel "ein" beziehungsweise "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Patentansprüchen sind nicht als den Umfang der Patentansprüche einschränkend zu verstehen.

### Figurenbeschrieb

Die Figuren werden zusammenhängend und übergreifend beschrieben. Gleiche Bezugszeichen bedeuten gleiche Bauteile. Es zeigen
Fig. 1: ein erstes erfindungsgemässes Verfahren zum Herstellen einer elektrischen Antriebskomponente in einem vereinfachten Flussdiagramm;
Fig. 2: eine erste erfinderische elektrische Antriebskomponente in einer vereinfachten schematischen Schnittdarstellung;
Fig. 3: einen Ausschnitt vom Schweissbereich B1 der elektrischen Antriebskomponente gemäss Fig. 2 in einer Schnittdarstellung;
Fig. 4: eine schematische Detaildarstellung der elektrischen Antriebskomponente gemäss Fig. 2 mit einem zweiten Befestigungselement in einer Herstellvorrichtung in einer Draufsicht;
Fig. 5a: ein Schliffbild einer Schweissverbindung S1 an der elektrischen Antriebskomponente gemäss Fig. 2;
Fig. 5b: ein schematisches Schliffbild einer Schweissverbindung S1 an der elektrischen Antriebskomponente gemäss Fig. 2;
Fig. 6: die Schweissverbindungen an der elektrischen Antriebskomponente gemäss Fig. 2 in einer schematischen Darstellung;
Fig. 7: die Schweissverbindung aus Fig. 6 in einer speziellen Schnittdarstellung;
Fig. 8: ein weiteres erfinderisches Verfahren zum Herstellen einer elektrischen Antriebskomponente in einem vereinfachten Flussdiagramm;
Fig. 9: eine zweite erfinderische elektrische Antriebskomponente in einer vereinfachten schematischen Schnittdarstellung;
Fig. 10: eine erfinderische Herstellvorrichtung zum Herstellen einer elektrischen Antriebskomponente gemäss Fig. 2 mit dem Verfahren gemäss Fig. 1 in einer perspektivischen Schnittdarstellung, und
Fig. 11: einen erfindungsgemässen elektrischen Antrieb mit einer elektrischen Antriebskomponente gemäss Fig. 2 in einer Schnittdarstellung.

### Ausführung der Erfindung

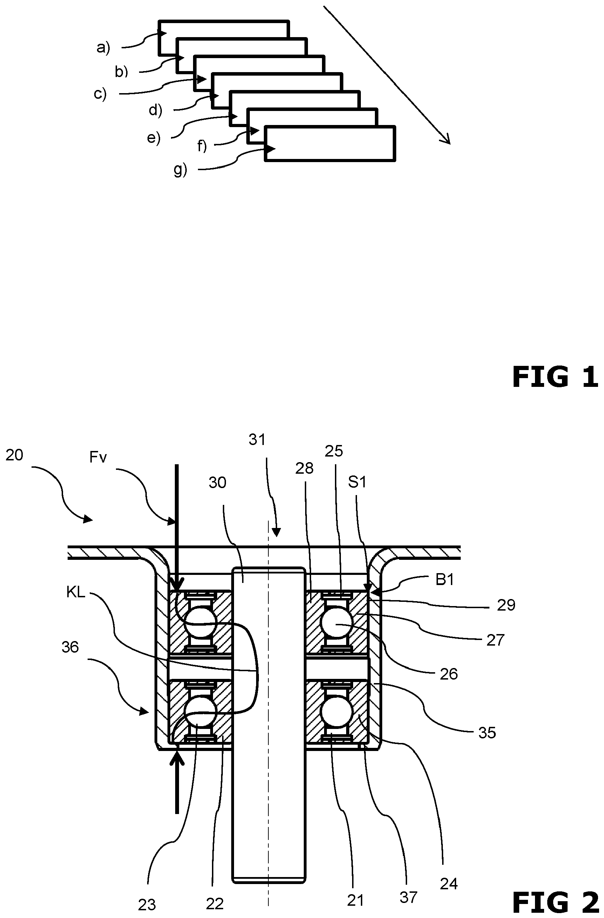

Figur 1 zeigt eine erste Ausführungsform eines Verfahrens zum Herstellen einer elektrischen Antriebskomponente 20 mit mindestens zwei Lagereinrichtungen 21, 25 und Figur 2 bis Figur 4 zeigen die elektrische Antriebskomponente 20 mit den mindestens zwei Lagereinrichtungen 21, 25 als Wälzlagereinrichtungen. Das Verfahren gemäss Figure 1 umfasst zumindest die folgenden Schritte:
a) Bereitstellen einer Welle 30, als ein erstes Befestigungselement 31;
b) Anordnen der ersten Lagereinrichtung 21 an der Welle 30;
c) Anordnen der zweiten Lagereinrichtung 25 an der Welle 30;
d) Einleiten einer Vorspannkraft Fv auf die zweite Lagereinrichtung 25, wobei
e) die eingeleitete Vorspannkraft Fv eine Krafteinwirkung auf beide Lagereinrichtungen 21, 25 bewirkt, und
f) die zweite Lagereinrichtung 25 bei wirkender Vorspannkraft Fv mit einem Gehäuseteil 35 für die Lagereinrichtungen 21, 25 als zweites Befestigungselement 36 in einem Schweissbereich B1, B2, B3 verschweisst wird, wodurch zumindest eine Schweissverbindung S1, S2, S3 zwischen einem Gehäuseteilmaterial des Gehäuseteils 35 mit einem Lagereinrichtungsmaterial der zweiten Lagereinrichtung 25 entsteht.

Die Wälzlagereinrichtungen 21, 25 sind als Kugellagereinrichtungen dargestellt und umfassen jeweils einen Innenring 22, 28, Kugeln 23, 26 und einen Aussenring 24, 27. Das Gehäuseteil 35 weist einen Anschlag 37 auf, an dem die erste Lagereinrichtung 21 vor dem Einleiten der Vorspannkraft Fv im Schritt b) in direkte Anlage gebracht wird, sodass die eingeleitete Vorspannkraft Fv gleichmässig auf beide Lagereinrichtungen 21, 25 wirkt. Die erste Lagereinrichtung 21 kann zusätzlich am Aussenring 24 mit dem Gehäuseteil 35 verklebt werden. Die Klebung dient insbesondere dazu, dass sich die Lagereinrichtung 21 bei der Herstellung der elektrischen Antriebskomponente 20 nicht verschiebt oder verklemmt. Beim Anordnen der ersten Lagereinrichtung 21 und der zweiten Lagereinrichtung 25 an die Welle 30, gemäss den Schritten b) und c) werden diese am jeweiligen Innenring 22, 28 mit der Welle 30 verpresst. Die Vorspannkraft Fv wird an der zweiten Lagereinrichtung 25 eingeleitet und wird dann über die Welle 30 auf die erste Lagereinrichtung 21 übertragen, sodass, nach dem Erstellen der Schweissverbindung S1, S2, S3, an beiden Lagereinrichtungen 21, 25 eine Vorspannung vorliegt - siehe Kraftlinie KL der Vorspannung in Figur 2. Die elektrische Antriebskomponente 20 kann für einen Elektromotor und/oder in einem Getriebe verwendet werden. Die elektrische Antriebskomponente 20 kann somit sowohl ein Getriebe als auch einen Elektromotor umfassen. Das Verfahren zur Anordnung der Lagereinrichtungen 21, 25 eignet sich sowohl für Getriebe als auch die Elektromotoren oder einer Kombination bestehend aus Getriebe und Elektromotor.

Die Vorspannkraft Fv wird über die beiden Lagereinrichtungen 21, 25 und die Welle 30 in die elektrische Antriebskomponente 20 gleichmässig verteilt eingeleitet. Die Vorspannkraft Fv kann dabei einen Betrag zwischen 20 Newton und 90 Newton aufweisen.

Die Schweissverbindung S1, S2, S3 wirkt zwischen dem Gehäuseteil 35 und einer Aussenringaussenkante 29 des Aussenrings 27 der zweiten Lagereinrichtung 25 stoffschlüssig. Die Kraftwirkung der eingeleiteten Vorspannkraft Fv wird vorab auf den Aussenring 27 einer der beiden Lagereinrichtungen 21, 25 eingeleitet. Dabei wird die Vorspannkraft Fv auf jene der beiden Lagereinrichtungen 21, 25 eingeleitet, welche nicht fest gegenüber dem Gehäuseteil 35, bspw. durch einen Anschlag 37 oder Verklebung, positioniert ist.

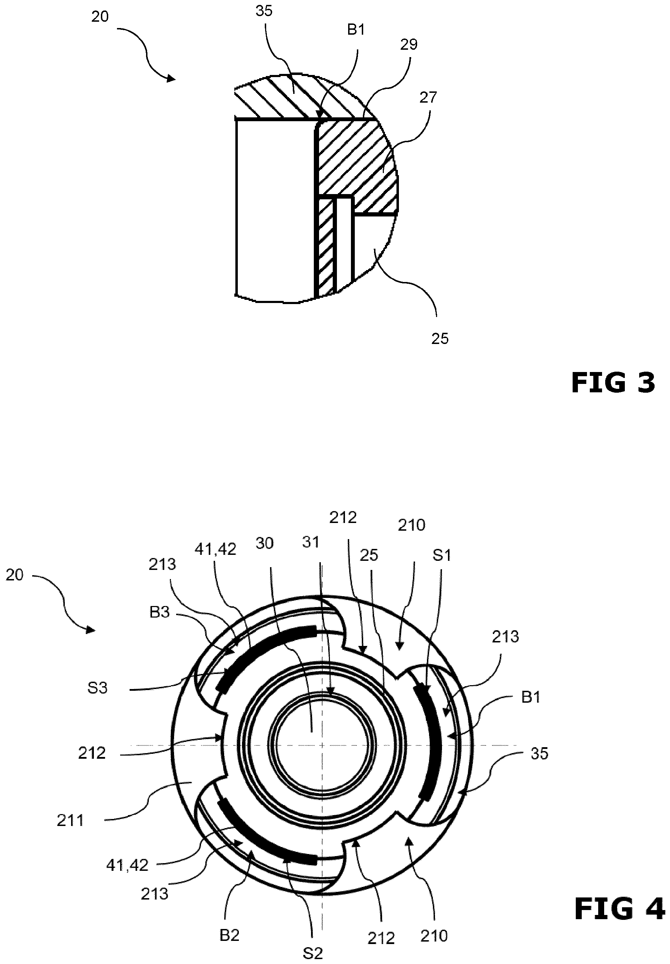

Figur 4 zeigt die elektrische Antriebskomponente 20 gemäss Figur 2 und Figur 3 in einer Draufsicht. Die elektrische Antriebskomponente 20 weist in den Schweissbereichen B1, B2, B3 die Schweissverbindung S1, S2, S3 auf, welche unter wirkender Vorspannkraft Fv entstanden sind. Die Figur 4 zeigt, dass die zweite Lagereinrichtung 25 bei wirkender Vorspannkraft Fv mit dem Gehäuseteil 35 für die Lagereinrichtungen 21, 25 als zweites Befestigungselement 36 in mehreren Schweissbereichen B1, B2, B3 in Anlage steht, wodurch die Schweissverbindung S1, S2, S3 zwischen dem Gehäuseteilmaterial des Gehäuseteils 35 mit dem Lagereinrichtungsmaterial der zweiten Lagereinrichtung 25 in einem weiteren Schritt g) entstehen kann.

Die geschweissten Schweissverbindungen S1, S2, S3 wirken zwischen dem Gehäuseteil 35 und einer Aussenringaussenkante 29 des Aussenrings 27 der zweiten Lagereinrichtung 25 stoffschlüssig. Die Kraftwirkung der eingeleiteten Vorspannkraft Fv wird auf den Aussenring 27 einer der beiden Lagereinrichtungen 21, 25 eingeleitet.

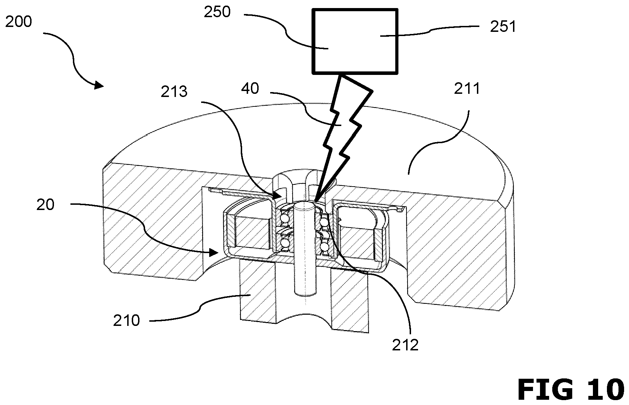

Mit einer Haltevorrichtung 210 kann eine Vorspannkraft Fv auf eine der beiden Lagereinrichtung 21, 25 erzeugt werden - siehe dazu auch Figur 10. Die Haltevorrichtung 210 weisst drei Auflagepunkte 212 auf. Die Haltevorrichtung 210 liegt mit einem Gewicht 211 auf diesen Auflagepunkten 212 auf dem Aussenring 27 der zweiten Lagereinrichtung 25 auf und überträgt dabei die Vorspannkraft Fv auf die zweite Lagereinrichtung 25. Zwischen den Auflagepunkten 212 sind Öffnungen 213 eingebracht. Die Öffnungen 213 ermöglichen das Herstellen von Schweissverbindungen S1, S2, S3 in den Schweissbereichen B1, B2, B3. Die Schweissverbindungen bestehen aus je einer Schweissnaht 41, welche sich in jedem der Schweissbereiche über ein Kreisringsegment 42 erstreckt. Die Schweissverbindungen zwischen dem Gehäuseteil 35 und einer der beiden Lagereinrichtung 21, 25, werden hergestellt, während eine Vorspannkraft Fv auf die zweite Lagereinrichtung 25 wirkt. Dadurch ist die zwei Lagereinrichtungen 21, 25 nach dem Erstellen der Schweissverbindungen S1, S2, S3 vorgespannt.

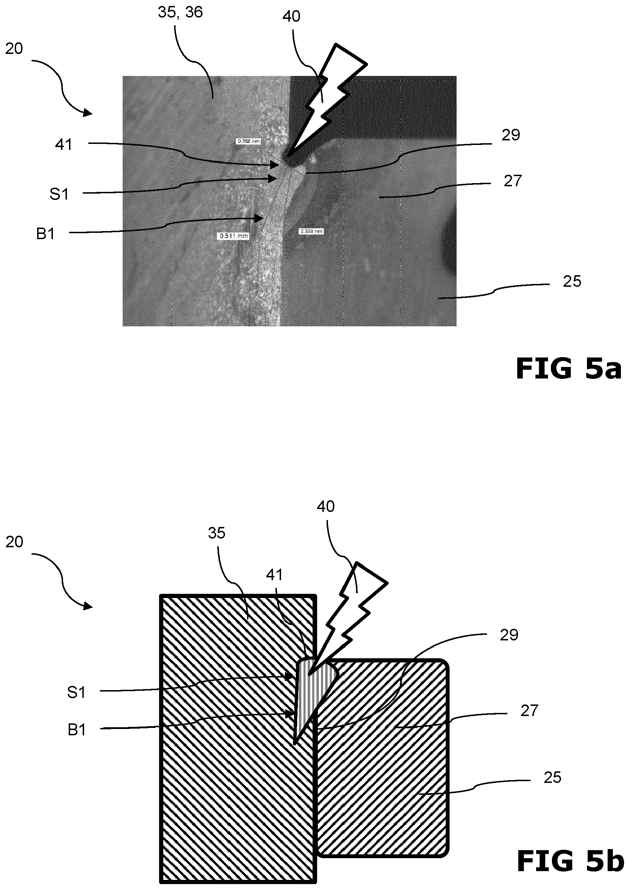

Figur 5a zeigt die Schweissverbindung S1, S2, S3 an der elektrischen Antriebskomponente gemäss Figur 2 und Figur 3 in einer Fotodarstellung. Figur 5b zeigt die Schweissverbindung S1, S2, S3 an der elektrischen Antriebskomponente gemäss Figur 2 und Figur 3 in einer schematischen Darstellung. Das Gehäuseteil 35 weist einen niedrigeren Kohlenstoffgehalt (0.035%) auf und umfasst einen nichtrostenden austenitischen Stahl. Die zweite Lagereinrichtung 25 bzw. der Aussenring 27 umfasst einen hohen Anteil an Kohlenstoff (hier 0.99%), der die Härtbarkeit der zweiten Lagereinrichtung 25 erhöht und aus dem Material 100Cr6 besteht. Die Schweissverbindungen S1, S2, S3 werden mit einer Laserstrahlschweisstechnik hergestellt. Der Schweissstahl 40 beim Laserschweissen weist einen hinreichend grossen Strahldurchmesser auf, sodass Herstellertoleranzen der zweiten Lagereinrichtung 25 abgefangen sind. Der Schweissstrahl 40 weist auch einen hinreichend kleinen Strahldurchmesser auf, um möglichst wenig Material des Aussenrings 27 der zweiten Lagereinrichtung 25 und des Gehäuses 35 aufzuschmelzen. Damit wird möglichst wenig thermische Energie der Schweissverbindung S1, S2, S3 zugeführt, wodurch eine geringe thermische Belastung insbesondere der zweiten Lagereinrichtung 25 resultiert. Der Schweissstrahl 40 wird zwischen die Aussenringaussenkante 29 der zweiten Lagereinrichtung 25 und dem Gehäuseteil 35 gerichtet. Dabei wird darauf geachtet, dass die Schweissverbindungen S1, S2, S3 weniger als 40% bzw. weniger als 20% des Lagereinrichtungsmaterials des Aussenrings 27 der zweiten Lagereinrichtung 25 umfasst und somit zumindest 60% bzw. zumindest 80% des Gehäusematerials des Gehäuseteils 35 umfasst ist. Während dem Schweissen wirkt die Vorspannkraft Fv auf die beiden Lagereinrichtungen 21, 25.

Die in der Figur 5a gezeigte Schweissverbindung S1, in Form einer Schweissnaht 41 oder einer Punktschweissverbindung, weist eine konkave Nahtoberfläche auf. Die Schweissnaht 41 wurde ohne Zusatzmaterial, in Form eines zugeführten Drahtes, eines aufgesetzten Ringes oder eingesprühtem Pulver, hergestellt. Dadurch ist die Schweissfuge nicht oder nicht komplett mit Schmelze aufgefüllt. Lediglich das vorhandene Befestigungselementmaterial des zweiten Befestigungselements 36 wird mit einem Lagereinrichtungsmaterial einer der beiden Lagereinrichtungen 21, 25 wie üblich beim Laserstrahl- oder Elektronenstrahlschweissen, aufgeschmolzen. Die Schweissnaht 41 wird somit in einem Verfahren erzeugt, bei welchem kein Zusatzmaterial zum Schweissen verwendet wird, wodurch eine unterwölbte (konkave) Nahtoberfläche erzeugt wird.

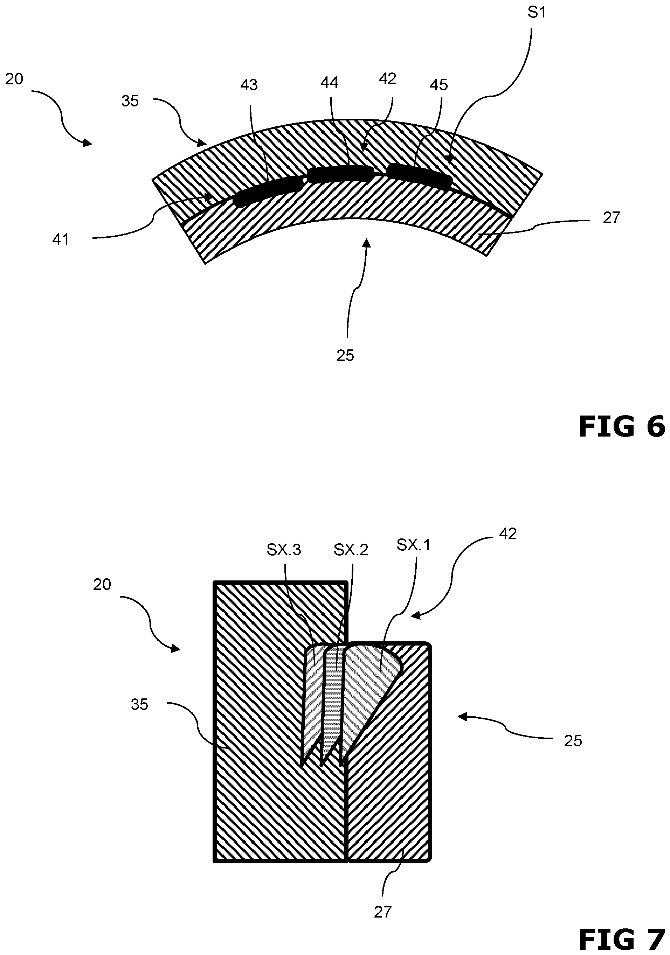

Figur 6 zeigt die Schweissverbindung S1, S2, S3 in einem Schweissbereich B1, B2, B3, an der elektrischen Antriebskomponente 20 in einer schematischen Darstellung gemäss Figur 4 und Figur 5a + 5b, wobei sich die Schweissverbindung S1, S2, S3 an der Längserstreckung des Aussenrings 27 der zweiten Lagereinrichtung 25 stoffschlüssig erstreckt und die Schweissverbindung S1, S2, S3 ein Kreisringsegment 42 ausbildet, welches sich 60° entlang eines Kreisrings an der zweiten Lagereinrichtung 25 erstreckt. Das Kreisringsegment 42 umfasst drei Schweissverbindungsabschnitte 43, 44, 45, bzw. Schweissnahtsegmente wobei die drei Schweissverbindungsabschnitte 43, 44, 45 entlang des Umfangs des Aussenrings 27 der zweiten Lagereinrichtung 25 angeordnet sind. Der erste und dritte Schweissverbindungsabschnitte 43, 45 weisen gegenüber dem zweiten Schweissverbindungsabschnitt 44 einen radialen Versatz von zumindest 0.1% des Radius des Aussenrings 27 der zweiten Lagereinrichtung 25 auf. Dabei ist der erste Schweissverbindungsabschnitt 43 nach innen zum Aussenring 27 der zweiten Lagereinrichtung 25 versetzt und der dritte Schweissverbindungsabschnitt 45 ist nach aussen zum Gehäuseteil 35 hin versetzt. Damit kann sichergestellt werden, dass sich die Schweissverbindung S1, S2, S3 an mehreren Schweissverbindungsabschnitten auch ausserhalb der Mitte des Fügespalts zwischen dem Aussenring 27 und dem Gehäuseteil 35 befindet und sowohl das Lagereinrichtungsmaterial als auch das Gehäuseteilmaterial in unterschiedlicher Zusammensetzung umfasst.

Figur 7 zeigt eine alternative Schweissverbindung SX welche mit dem zuvor beschrieben Verfahren bzw. der elektrischen Antriebskomponente 20 gemäss den Figuren 1 bis 6 erstellt wurde, in einer schematischen Schnittdarstellung, wobei am Kreisringsegment 42 jeder der drei Schweissverbindungsabschnitte 43, 44, 45 einmal in jedem der Schweissbereiche B1, B2, B3 geschweisst wird. An der elektrischen Antriebskomponente 20 sind jeweils drei Kreisringsegmente 42 vorgesehen. Am Beispiel der Schweissverbindung SX.2 ist gezeigt, dass die Schweissung mit einer Schweissstrahlausrichtung am Schweissverbindungsabschnitt 44 zuerst auf die Mitte des Fügespalts zwischen der zweiten Lagereinrichtung 25 und dem Gehäuseteil 35, erfolgt. Die Schweissverbindung SX.1 erfolgt im selben Schweissbereich B mit einer Schweissstrahlausrichtung 0.10 mm näher an der zweiten Lagereinrichtung 25. Die dritten Schweissverbindung SX.3 erfolgt am selben Kreisringsegment 42 im dritten Schweissverbindungsabschnitt 45 mit einer Schweissstrahlausrichtung 0.10 mm näher am Gehäuseteil 35. Die Darstellung soll den Verlauf der Schweissnaht 41 in einem Kreisringsegment 42 im Material der elektrischen Antriebskomponente 20 bei unterschiedlicher Ausrichtung des Schweissstrahls 40 auf den Fügespalt zwischen dem Aussenring 27 der zweiten Lagereinrichtung 25 und dem Gehäuseteil 35 oder in anderen Ausführungsbeispielen, dem Innenring 28 der zweiten Lagereinrichtung und der Welle 30 zeigen. Die Darstellung ist schematisch und ist keine korrekte Schnittdarstellung, wobei sich die Schnittebene entlang des Umfangs der Schweissverbindungsabschnitte 43, 44, 45 verändern.

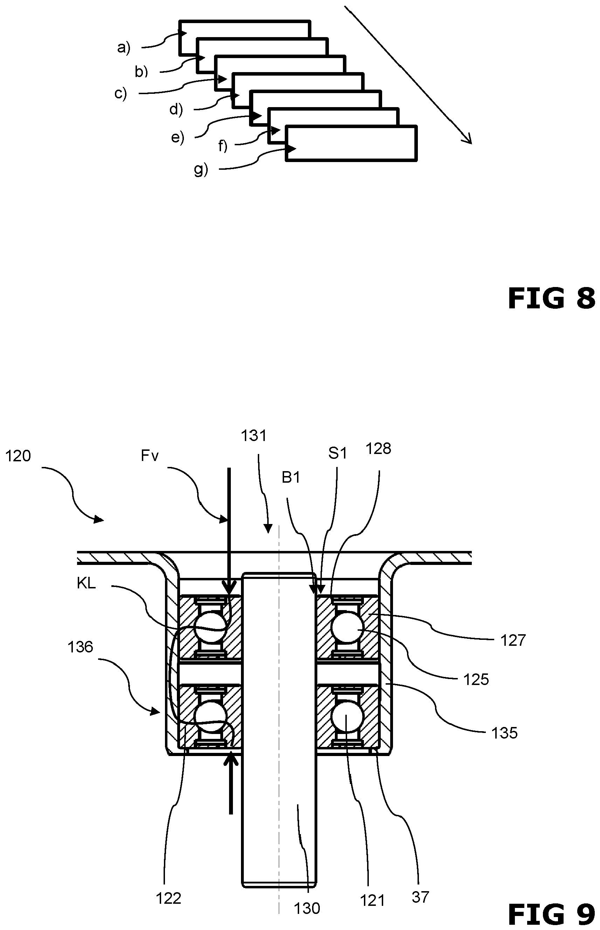

Figur 8 zeigt eine weitere Ausführungsform eines Verfahrens zum Herstellen einer elektrischen Antriebskomponente 120 mit mindestens zwei Lagereinrichtungen 121, 125 und Figur 9 zeigt den elektrischen Antrieb 120 mit den mindestens zwei Lagereinrichtungen 121, 125 als Wälzlagereinrichtungen. Das Verfahren gemäss Figur 8 umfasst zumindest die folgenden Schritte:
a) Bereitstellen eines Gehäuseteils 135 für die Lagereinrichtungen 121, 125, als ein erstes Befestigungselement 136;
b) Anordnen der ersten Lagereinrichtung 121 an dem Gehäuseteil 135;
c) Anordnen der zweiten Lagereinrichtung 125 an dem Gehäuseteil 135;
d) Einleiten einer Vorspannkraft Fv auf die zweite Lagereinrichtung 125, wobei
e) die eingeleitete Vorspannkraft Fv eine Krafteinwirkung auf beide Lagereinrichtungen 121, 125 bewirkt; und
f) die zweite Lagereinrichtung 125 bei wirkender Vorspannkraft Fv mit einer Welle 130 als zweites Befestigungselement 131 in einem Schweissbereich B1, B2, B3 verschweisst wird, wodurch zumindest eine Schweissverbindung S1, S2, S3 zwischen einem Wellenmaterial der Welle 130 mit einem Lagereinrichtungsmaterial der zweiten Lagereinrichtung 125 entsteht.

Das Verfahren zum Herstellen der elektrischen Antriebskomponente 120 erfolgt im Wesentlichen wie zuvor in den Figuren 1 bis 8 offenbart, jedoch wird der Schweissstrahl 40 zwischen einer Innenringaussenkante des Innenrings 128 der zweiten Lagereinrichtung 125 und der Welle 130 gerichtet, um die Schweissverbindungen S1 bis S3, wie zuvor in den Figuren 5a bis 7 offenbart, zu erzeugen. Damit kann sichergestellt werden, dass sowohl das Lagereinrichtungsmaterial der zweiten Lagereinrichtung 125 als auch das Wellenmaterial der Welle 130 zur Schweissverbindung S1, S2, S3 beitragen. Die Vorspannkraft Fv wird an der zweiten Lagereinrichtung 125 eingeleitet und wird dann über das Gehäuseteil 135 auf die erste Lagereinrichtung 121 übertragen, sodass, nach dem Erstellen der Schweissverbindung S1, S2, S3, an beiden Lagereinrichtungen 121, 125 eine Vorspannung vorliegt - siehe Kraftlinie KL der Vorspannung in Figur 9. Beim Anordnen der ersten Lagereinrichtung 121 und der zweiten Lagereinrichtung 125 am Gehäuseteil 135, gemäss den Schritten b) und c) können diese am jeweiligen Aussenring 122, 127 mit dem Gehäuseteil 135 verpresst werden. Alternativ können die erste und zweite Lagereinrichtung 121, 125 auch am Gehäuseteil 135 angeschweisst oder angelötet werden. Das Gehäuseteil 135 weist einen Anschlag 37 auf, an dem die erste Lagereinrichtung 121 vor dem Einleiten der Vorspannkraft Fv im Schritt b) in direkte Anlage gebracht wird. Die eingeleitete Vorspannkraft Fv wirkt gleichmässig auf beide Lagereinrichtungen 121, 125. Ein Innenring 122 der ersten Lagerreinrichtung 121 kann gegenüber der Welle 130 eine Presspassung aufweisen. Dadurch wird der Innenring 122 der ersten Lagerreinrichtung 121 auf die Welle 130 aufgepresst. Der Innenring 122 der zweiten Lagerreinrichtung 125 weisst vorzugsweise eine Übergangspassung oder eine Spielpassung gegenüber der Welle 130 auf, sodass nach dem Anlegen einer Vorspannung Fv ein Verschieben zwischen dem Innenring 122 und dem der Welle 130 möglich ist. Die elektrische Antriebskomponente 120 kann wiederum für einen Elektromotor oder in einem Getriebe verwendet werden.

In einer weiteren Ausführungsform des Verfahrens gemäss der Figur 8 kann zumindest die Schweissverbindung S1, S2, S3 auf einer Hülse für die Welle 130 erzeugt werden, wobei die Hülse auf der Welle 130 festsitzt (nicht gezeigt). In einer weiteren nicht gezeigten Ausführungsform kann sowohl eine Schweissverbindung S1, S2, S3 zwischen dem Gehäuseteil 135 für die erste Lagereinrichtung 121 und die zweite Lagereinrichtung 125 sowie eine weitere Schweissverbindung zwischen der Welle 130 und einer der beiden Lagereinrichtungen 121, 125 erzeugt werden (nicht gezeigt).

Figur 10 zeigen eine Herstellvorrichtung 200 zum Herstellen der elektrischen Antriebskomponente 20 gemäss den Figuren 2 bis 7 und mithilfe des Verfahrens gemäss Figur 1. Die Herstellvorrichtung umfasst eine Haltevorrichtung 210 zum Halten der elektrischen Antriebskomponente 20 und zumindest ein Gewicht 211 zum Aufbringen einer Vorspannkraft Fv auf die zweite Lagereinrichtung 25 sowie eine Laserschweisseinrichtung 250 zum Erstellen einer Schweissverbindung S1, S2, S3 mithilfe eines Schweissstrahl 40. Das Gewicht 211 wirkt an drei Auflagepunkten 212, welche jeweils um 120° zueinander versetzt angeordnet sind, auf die zweite Lagereinrichtung 25. Am Gewicht 211 ist eine Öffnung 213 vorhanden, sodass der Schweissstrahl 40 durch die Öffnung 213 hindurch auf die elektrische Antriebskomponente 20 positionsgenau strahlbar ist. Es ist möglich die Haltevorrichtung 210 gegenüber der Laserschweisseinrichtung 250 zu verschieben, um die Schweissverbindungen S1, S2, S3 zu erstellen. Es ist aber auch möglich den Schweissstrahl 40 durch Ablenkung derart zu positionieren, dass die Schweissverbindungen S1, S2, S3 an den vorgesehenen Positionen entstehen. Die Position der Schweissbereiche B1 bis B3 für die Schweissverbindungen S1 bis S3 sind damit reproduzierbar und exakt bestimmbar.

Die Laserschweisseinrichtung 250 kann mit einer Positioniereinrichtung 251 verbunden sein, welche mit der Halteeinrichtung 210 verbunden ist.

Alternativ oder ergänzend kann bspw. eine Vorspannplatte verwendet werden, die an der elektrischen Antriebskomponente 20 befestigbar ist und pneumatisch, über Federn oder sonst mechanisch die notwendige Vorspannkraft reproduzierbar aufbringt (nicht gezeigt).

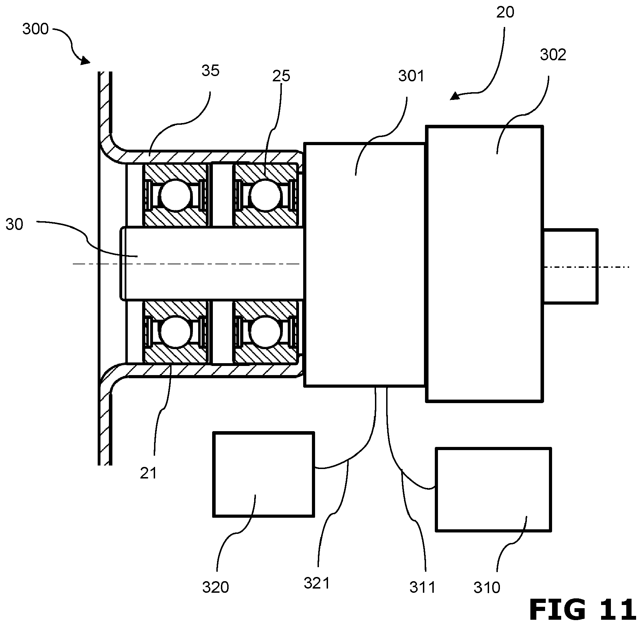

Figur 11 zeigt einen elektrischen Antrieb 300 mit zwei Lagereinrichtungen 21, 25 mit einer, wie zuvor in den Figuren 1 bis 7 beschriebenen, elektrischen Antriebskomponente 20 bestehend aus Elektromotor 301 und Getriebe 302, wobei die elektrische Antriebskomponente 20 die zwei Lagereinrichtungen 21, 25 umfasst und eine Vorspannung auf die beiden Lagereinrichtungen 21, 20 wirkt. Die Vorspannung wirkt aufgrund zumindest einer Schweissverbindung S1, S2, S3 zwischen einem Gehäusematerial des Gehäuseteils 35 mit einem Lagereinrichtungsmaterial der zweiten Lagereinrichtung 25. Die elektrische Antriebsvorrichtung 300 kann sowohl einen Elektromotor 301 als auch ein Getriebe 302 umfassen. Die elektrische Antriebsvorrichtung 300 umfasst neben den elektrischen und mechanischen Bestandteilen, wie nicht abschliessend aufgezählt, die Welle 30, ein Gehäuse 34, elektrische Spulen 33, Magnete 38. Die elektrischen Spulen 33 können von der Antriebswelle 30 beabstandet und am Gehäuseteil 35 angeordnet sein. Der Durchmesser der elektrischen Spulen 33 kann grösser sein als der Durchmesser der Antriebswelle 30. Die Magnete 38 sind unmittelbar benachbart zu den elektrischen Spulen 33 angeordnet. Weiters sind auch eine Steuerungseinrichtung 310 zum Steuern der elektrischen Antriebskomponente 20 und eine Versorgungseinrichtung 320 zum Versorgen der elektrischen Antriebskomponente 20 mit elektrischer Energie vorhanden, welche mit Datenkabel 311 und Versorgungskabel 321 mit der elektrischen

Antriebskomponente 20 verbunden sind. Die Steuereinrichtung 310 kann Steuerbefehle aufweisen, die die elektrische Antriebskomponente 20 vorzugsweise mit einer erhöhten Leistungsfähigkeit antreiben.

### Bezugszeichenliste

- 20: Elektrische Antriebskomponente
- 21: Erste Lagereinrichtung - Kugellagereinrichtung
- 22: Innenring von 21
- 23: Kugeln von 21
- 24: Aussenring von 21
- 24a: Aussenringaussenkante von 24
- 25: Zweite Lagereinrichtung - Kugellagereinrichtung
- 26: Kugeln von 25
- 27: Aussenring von 25
- 28: Innenring von 25
- 29: Aussenringaussenkante von 27
- 30: Welle von 20
- 31: Erstes Befestigungselement
- 33: Elektrische Spulen (nicht gezeigt)
- 34: Gehäuse (nicht gezeigt)
- 35: Gehäuseteil
- 36: Zweites Befestigungselement
- 37: Anschlag
- 38: Magnete (nicht gezeigt)
- 40: Schweissstrahl
- 41: Schweissnaht
- 42: Kreisringsegment
- 43: Erster Schweissverbindungsabschnitt von 42
- 44: Zweiter Schweissverbindungsabschnitt von 42
- 45: Dritter Schweissverbindungsabschnitt von 42
- B1, B2, B3: Schweissbereiche
- S1: Erste Schweissverbindung
- S2: Zweite Schweissverbindung
- S3: Dritte Schweissverbindung
- SX: Schweissverbindung
- SX.1: Erste Schweissverbindung
- SX.2: Zweite Schweissverbindung
- SX.3: Dritte Schweissverbindung
- Fv: Vorspannkraft
- KL: Kraftlinie von Fv
- a)-g): Verfahrensschritte

- 120: Elektrischer Antrieb
- 121: Erste Lagereinrichtung - Kugellagereinrichtung
- 122: Innenring von 121
- 125: Zweite Lagereinrichtung - Kugellagereinrichtung
- 127: Aussenring von 125
- 128: Innenring von 125
- 130: Welle von 120
- 131: zweites Befestigungselement
- 135: Gehäuseteil
- 136: Erstes Befestigungselement

- 200: Herstellvorrichtung
- 210: Haltevorrichtung
- 211: Gewicht
- 212: Auflagepunkte
- 213: Öffnung in 211

- 250: Laserschweisseinrichtung
- 251: Positioniereinrichtung

- 300: Elektrischer Antrieb
- 301: Elektromotor
- 302: Getriebe
- 310: Steuerungseinrichtung
- 311: Datenkabel
- 320: Versorgungseinrichtung
- 321: Versorgungskabel

## Patentansprüche

1. Verfahren zum Herstellen einer elektrischen Antriebskomponente (20; 120) mit mindestens zwei Lagereinrichtungen (21, 25; 121, 125), insbesondere zumindest zwei Wälzlagereinrichtungen, umfassend zumindest die folgenden Schritte:
a) Bereitstellen eines ersten Befestigungselements (31; 136);
b) Anordnen einer ersten Lagereinrichtung (21, 121) an dem ersten Befestigungselement (31; 136);
c) Anordnen einer zweiten Lagereinrichtung (25, 125) an dem ersten Befestigungselement (31; 136);
d) Einleiten einer Vorspannkraft (Fv) auf zumindest eine der beiden Lagereinrichtungen (21, 25; 121, 125), **dadurch gekennzeichnet, dass**
e) die eingeleitete Vorspannkraft (Fv) eine Krafteinwirkung auf beide Lagereinrichtungen (21, 25; 121, 125) bewirkt; und
f) zumindest eine der beiden Lagereinrichtungen (21, 25; 121, 125) bei wirkender Vorspannkraft (Fv) mit zumindest einem zweiten Befestigungselement (36; 131) in mindestens einem Schweissbereich (B1, B2, B3) verschweisst wird, wodurch zumindest eine Schweissverbindung (S1, S2, S3) zwischen einem Befestigungselementmaterial des zweiten Befestigungselements (36; 131) mit einem Lagereinrichtungsmaterial einer der beiden Lagereinrichtungen (21, 25; 121, 125) entsteht.

2. Verfahren nach Anspruch 1, **dadurch gekennzeichnet, dass** das erste Befestigungselement (31) eine Welle (30) der elektrischen Antriebskomponente (20) ist und das zweite Befestigungselement (36) ein Gehäuseteil (35) für die Lagereinrichtungen (21, 25; 121, 125) ist, wobei zumindest eine Schweissverbindung (S1, S2, S3) zwischen einem Gehäuseteilmaterial des Gehäuseteils (35) und dem Lagereinrichtungsmaterial einer der beiden Lagereinrichtungen (21, 25) entsteht.

3. Verfahren nach Anspruch 2, **dadurch gekennzeichnet, dass** die Schweissverbindung (S1, S2, S3) zwischen dem Gehäuseteil (35) und einem Aussenring (27) einer der beiden Lagereinrichtungen (21, 25) stoffschlüssig wirkt, wobei die Schweissverbindung (S1, S2, S3) insbesondere an der Längserstreckung des Aussenrings (27) einer der beiden Lagereinrichtungen (21, 25) stoffschlüssig wirkt, und bevorzugt die Schweissverbindung (S1, S2, S3) an einer Aussenringaussenkante (29, 24a) einer der beiden Lagereinrichtungen (21, 25) stoffschlüssig wirkt, und vorteilhaft die Kraftwirkung der eingeleiteten Vorspannkraft (Fv) auf den Aussenring (27, 24) einer der beiden Lagereinrichtungen (21, 25) eingeleitet wird.

4. Verfahren nach Anspruch 1, **dadurch gekennzeichnet, dass** das erste Befestigungselement (136) ein Gehäuseteil (135) für die Lagereinrichtungen (121, 125) ist und das zweite Befestigungselement (131) eine Welle (130) der elektrischen Antriebskomponente (20) ist, wobei zumindest eine Schweissverbindung (S1, S2, S3) zwischen einem Wellenmaterial der Welle (130) mit dem Lagereinrichtungsmaterial einer der beiden Lagereinrichtungen (121, 125) entsteht.

5. Verfahren nach einem der zuvor genannten Ansprüche, **dadurch gekennzeichnet, dass** die zumindest eine Schweissverbindung (S1, S2, S3) durch zumindest eine Schweissnaht (41) erzeugt wird, welche ein Kreisringsegment (42) ausbildet, dass sich insbesondere 20° bis 90°, bevorzugt 40°, entlang eines Kreisrings an einer der beiden Lagereinrichtungen (21, 25; 121, 125) erstreckt.

6. Verfahren nach Anspruch 5, **dadurch gekennzeichnet, dass** das Kreisringsegment (42) aus zumindest zwei Schweissverbindungsabschnitten (43, 44, 45) besteht, wobei die zumindest zwei Schweissverbindungsabschnitte (43, 44, 45) entlang des Umfangs des Aussenrings (27) der Lagereinrichtung (21, 25) oder des Innenrings (128) der Lagereinrichtung (121, 125) angeordnet sind und insbesondere einen radialen Versatz von zumindest 0.1% des Radius des Aussenrings (27) der Lagereinrichtung (21, 25; 121, 125) zueinander aufweisen.

7. Verfahren nach einem der zuvor genannten Ansprüche, **dadurch gekennzeichnet, dass** die zumindest eine Schweissverbindung (S1, S2, S3) weniger als 40% des Lagereinrichtungsmaterials einer der beiden Lagereinrichtungen (21, 25; 121, 125) umfasst, und insbesondere weniger als 20% des Lagereinrichtungsmaterials umfasst.

8. Verfahren nach einem der zuvor genannten Ansprüche, **dadurch gekennzeichnet, dass** die Vorspannkraft (Fv) einen Betrag von 1 Newton bis 500 Newton, insbesondere 20 Newton bis 90 Newton, aufweist.

9. Verfahren nach einem der zuvor genannten Ansprüche, **dadurch gekennzeichnet, dass** die erste und/oder zweite Lagereinrichtung (21, 25; 121, 125) mit dem ersten Befestigungselemente (31; 136) verpresst wird.

10. Elektrische Antriebskomponente (20; 120) umfassend zumindest ein erstes Befestigungselement (31; 136), wobei an dem ersten Befestigungselement (31; 136) zumindest eine erste und eine zweite Lagereinrichtung (21, 25; 121, 125), insbesondere erste und zweite Wälzlagereinrichtungen, vorgespannt angeordnet sind, **dadurch gekennzeichnet, dass** die Vorspannung aufgrund zumindest einer Schweissverbindung (S1, S2, S3) zwischen einem Befestigungselementmaterial eines zweiten Befestigungselements (36; 131) mit einem Lagereinrichtungsmaterial einer der beiden Lagereinrichtungen (21, 25; 121, 125) wirkt, wobei die Schweissverbindung (S1, S2, S3) insbesondere unter Einbringung einer Vorspannkraft (Fv) gemäss einem Verfahren nach einem der Ansprüche 1 bis 9 hergestellt ist.

11. Elektrische Antriebskomponente nach Anspruch 10, **dadurch gekennzeichnet, dass** die zumindest eine Schweissverbindung (S1, S2, S3) zumindest eine Schweissnaht (41) aufweist, welche ein Kreisringsegment (42) ausbildet, dass sich insbesondere 20° bis 90°, bevorzugt 40°, entlang eines Kreisrings an einer der beiden Lagereinrichtungen (21, 25; 121, 125) erstreckt.

12. Elektrische Antriebskomponente nach Anspruch 11, **dadurch gekennzeichnet, dass** die Schweissnaht (41) eine konkave Nahtoberfläche aufweist.

13. Elektrische Antriebskomponente nach Anspruch 11 oder 12, **dadurch gekennzeichnet, dass** die Schweissnaht (41) eine Schweissnahtbreite von weniger als 0.5 mm, insbesondere eine Schweissnahtbreite von weniger als 0.25 mm aufweist.

14. Herstellvorrichtung (200) zum Herstellen einer elektrischen Antriebskomponente (20; 120) mit mindestens zwei vorgespannten Lagereinrichtungen (21, 25; 121, 125), umfassend eine Haltevorrichtung (210) zum Halten zumindest eines zweiten Befestigungselements (36; 131), mit zumindest einem Mittel (211) zum Aufbringen einer Vorspannkraft (Fv) auf eine der beiden Lagereinrichtungen (21, 25; 121, 125) sowie eine Einrichtung zum Erstellen zumindest einer Schweissverbindung (S1, S2, S3) durch Schmelzschweissen mit Strahlung.

15. Elektrischer Antrieb (300) mit einer elektrischen Antriebskomponente (20; 120) gemäss den Ansprüchen 10 bis 12, **dadurch gekennzeichnet, dass** die elektrische Antriebskomponente (20; 120) mindestens zwei Lagereinrichtungen (21, 25; 121, 125) umfasst und eine Vorspannung auf die beiden Lagereinrichtungen (21, 25; 121, 125) wirkt, wobei die Vorspannung aufgrund zumindest einer Schweissverbindung (S1, S2, S3) zwischen einem Befestigungselementmaterial des zweiten Befestigungselements (36; 131) mit einem Lagereinrichtungsmaterial einer der beiden Lagereinrichtungen (21, 25; 121, 125), welche unter wirkender Vorspannkraft (Fv) verschweisst sind, wirkt.
